# EUROPEAN PATENT SPECIFICATION

(11) **EP 3 301 282 B1**
(45) Date of publication and mention of the grant of the patent: **16.09.2020**
(21) Application number: 17192708.0
(22) Date of filing: 22.09.2017
(51) Int. Cl.: F02D 41/08, F02D 41/14, F02D 41/16, F02D 29/06, H02P 9/00, H02P 9/10

(54) **VEHICLE**
FAHRZEUG
VÉHICULE

(30) Priority: 28.09.2016 JP 2016189635
(43) Date of publication of application: 04.04.2018
(73) Proprietor: Yamaha Hatsudoki Kabushiki Kaisha, Iwata-shi Shizuoka 438-8501 (JP)
(72) Inventor: OBA, Tatsuhiro, Iwata-shi, Shizuoka 438-8501 (JP); NISHIKAWA, Takahiro, Iwata-shi, Shizuoka 438-8501 (JP); KAJIWARA, Kenichi, Iwata-shi, Shizuoka 438-8501 (JP)
(74) Representative: Grünecker Patent- und Rechtsanwälte PartG mbB

(56) References cited:
- EP-A1- 3 064 748
- FR-A1- 2 908 476
- JP-A- 2006 129 680
- US-A1- 2009 079 190

## Description

The present teaching relates to a vehicle and to a method for controlling a vehicle.

Prior art document EP 3 064 748 A1 discloses an engine unit that is able to ensure an amount of power generation with a high efficiency even if the rotation speed of a crankshaft is lowered when a vehicle is stopped, without any need to increase the size of a generator. The engine unit includes: a four-stroke engine body; a generator that outputs a voltage lower than a voltage of a battery provided in the vehicle when the crankshaft rotates at a rotation speed equal to an idling speed; an inverter including a plurality of switching parts; and a control device. During at least part of a time period in which the vehicle is stopped and a voltage outputted from the generator is lower than the voltage of the battery, the control device performs a vector control on the plurality of switching parts included in the inverter so as to raise the voltage outputted from the generator that is lower than the voltage of the battery to a voltage higher than the voltage of the battery, to charge the battery.

Prior art document JP 2006 129680 A discloses an apparatus of controlling a generator which can suppress a change in the rotational speed of an engine during an engine cycle by increasing or decreasing a generating load to be given to the engine according to predetermined timing set during the engine cycle. In the apparatus of controlling the generator driven by the engine, an ECU includes a timing detector for detecting incoming of predetermined timing (starting timing, for example, of an exploding step) set during the engine cycle of the engine, and a power generation load control means for controlling the power generation loading of the generator to the engine according to the incoming of the predetermined timing detected by the timing detector. In particular, the power generation load control means increases the power generation load of the generator on the engine to a predetermined power generation load within one engine cycle of the engine in response to the arrival of the predetermined timing, and causes the generator to generate power at the predetermined power generation load over time, and thereafter reduces the power generation load of the generator on the engine, wherein the generator further includes time increasing/decreasing means for increasing or decreasing the predetermined time.

Prior art document US 2009/079190 A1 discloses a power generation control device for a generator driven by a four-stroke cycle engine is provided. The power generation control device includes a switching circuit for controlling an output current from the generator; and a power generation period control device configured to operate the switching circuit to output the output current from the generator in only a predetermined power generation period of the four strokes of the engine, wherein the power generation period ranges from an expansion stroke to an intake stroke of the four strokes. In particular, it is suggested a power generation control device for a generator adapted to be driven by a four-stoke cycle engine, the power generation control device including a switching circuit for controlling an output current from the generator; and power generation period control means for operating the switching circuit in only a predetermined power generation period in the four strokes of the engine; wherein the power generation period ranges from the expansion stroke to the intake stroke of the four strokes.

Prior art document FR 2 908 476 A1 discloses a control circuit to control field and armature currents of a rotary electric machine. A detection part detects an electrical energy quantity in a power supply system connected to the machine. An electronic control unit has a suppressing section to suppress rotational fluctuation of an internal combustion engine of a vehicle by controlling an electrical energy generation quantity and moment of torsion generated from the machine based on electrical energy load of the vehicle, the energy quantity of the system and a rotation speed of the machine. In particular, prior art document FR 2 908 476 A1 suggest a switch between a normal power generation mode and a short-circuit mode. However, the suppressing section of the rotational fluctuations according to prior art document FR 2 908 476 A1 control an amount of electric power generation and the generated torque according to the amount of electric power of the electric power system and the rotational speed of said rotating electric machine. As the result, the types of the control is switched synchronized to stroke of the engine. Therefore, changes of the load to rotation of the crankshaft interfere with the operation of the engine.

A vehicle equipped with an engine runs with an output of the engine. While the engine is idling, operations of the engine do not contribute to running of the vehicle. It is therefore desirable that the rotation speed of a crankshaft of the engine at a time of idling be decreased from the viewpoint of suppression of fuel consumption.

A decrease in the rotation speed tends to make the engine rotation unstable. Particularly in a single-cylinder engine or a two-cylinder engine, a combustion stroke in which the crankshaft is driven comes at wide intervals, and therefore rotation is likely to be unstable.

JP 4573298 (Japanese Patent) shows a variable rotation control device of an internal combustion engine. In a compression stroke, the variable rotation control device directs a motor generator to function as a motor, thus generating a driving force. Specifically, the function of the motor generator as the motor is exerted in accordance with the rotation angle of the crankshaft.

The variable rotation control device of JP 4573298 aims to assist rotation of the crankshaft in the compression stroke of the internal combustion engine. Lowering a load on rotation of the crankshaft is intended. In this manner the variable rotation control device of Patent Document 1 controls the rotation speed of the crankshaft.

The variable rotation control device of JP 4573298, however, directs the motor generator to function as the motor in each compression stroke. That is, the motor generator does not generate power but consumes power. As a result, it may not be ensured that the motor generator generate an amount of power. While the motor generator is idling, the rotation speed of the crankshaft is low. It is therefore difficult to ensure that the motor generator generate an amount of power.

An object of the present teaching is to provide a vehicle and a method for controlling a vehicle that is able to ensure generated power while ensuring stability of engine rotation.

According to the present invention said object is solved by a vehicle having the features of independent claim 1. Moreover, said object is also solved by a method for controlling a vehicle having the features of independent claim 7. Preferred embodiments are laid down in the dependent claims.

Stability of rotation of a crankshaft at a time of engine idling may be taken into consideration. As a factor in hindering stability of rotation of the crankshaft, it may be focused a combustion stroke in which rotational power of the crankshaft is caused instead of a compression stroke in which a resistance is applied to rotation of the crankshaft. As for the combustion stroke, it may be focused the relationship between the amount of mixed gas supplied to the engine and the stability of rotation.

At a time of engine idling, as compared with non-idling, the amount of air supplied to the engine, that is, the amount of mixed gas supplied to the engine, is small. If a target value of the rotation speed of the crankshaft is further lowered during idling, the amount of mixed gas supplied to the engine is further reduced. This may result in insufficient engine combustion. Consequently, the rotation of the crankshaft may be unstable. The insufficient combustion includes, for example, a state where a mixed gas containing a fuel is only partially combusted in the engine. The insufficient combustion also includes, for example, a state where no combustion occurs in part of a plurality of combustion strokes (expansion strokes) which repeatedly come in the course of engine operation.

One way for ensuring sufficient engine combustion to obtain stable rotation of the crankshaft is to increase the amount of mixed gas supplied to the engine. An increase in the amount of mixed gas supplied, however, leads to an increase in the rotation speed of the crankshaft. An increase in the rotation speed of the crankshaft leads to an increase in fuel consumption, because the number of times combustion occurs per unit period is increased.

It may be conceived of an idea of intentionally applying a load to the crankshaft for the purpose of stabilizing engine combustion. Furthermore, it may be reached an idea that means for applying a load to the crankshaft can be implemented by a permanent magnet type rotary electric machine configured to receive rotational power of the crankshaft to generate power. It may be discovered that producing a load on forward rotation of the crankshaft and selectively adopting a plurality of types of load controls having different power generation efficiencies enables continuous application of a high load to the forward rotation of the crankshaft.

Continuously applying a load to forward rotation of the crankshaft at a time of engine idling makes it possible to increase the amount of mixed gas supplied to the engine with suppression of an increase in the rotation speed of the crankshaft. This can ensure more stability of engine rotation as compared with, for example, reducing the rotation speed by reducing the amount of mixed gas without applying any load to forward rotation at a time of idling. Since an increase in the rotation speed of the crankshaft is suppressed, an increase in fuel consumption is suppressed, too. Furthermore, power generation can be performed with continuous application of a load to forward rotation of the crankshaft, and therefore generated power is ensured better than when the function as a motor is implemented at a time of engine idling. Accordingly, generated power can be ensured while stability of engine rotation is ensured.

A technical concept of the present teaching is to ensure generated power while ensuring stability of engine rotation by intentionally and continuously applying a high load to forward rotation of the crankshaft at a time of engine idling. This is different from the concept of JP 4573298 that forward rotation of the crankshaft is assisted by operations as a motor in a compression stroke.

The vehicle includes an engine and a permanent magnet type rotary electric machine. The engine includes one or two cylinders and a crankshaft, and outputs rotational power via the crankshaft. The permanent magnet type rotary electric machine includes a permanent magnet, and applies a load to rotation of the crankshaft while generating power by receiving rotational power of the crankshaft.

The vehicle includes a battery, a power consuming apparatus, an inverter, and a control device. The battery is charged with power generated by the permanent magnet type rotary electric machine. The power consuming apparatus is mounted to the vehicle. The power consuming apparatus operates while consuming power generated by the permanent magnet type rotary electric machine or power charged in the battery. The inverter includes a plurality of switching parts. The plurality of switching parts control a current outputted from the permanent magnet type rotary electric machine to the battery and the power consuming apparatus. The control device selectively adopts a plurality of types of load controls as a method of controlling the switching parts of the inverter. Each of the plurality of types of load controls is a control for directing the permanent magnet type rotary electric machine to produce a load on forward rotation of the crankshaft. The plurality of types of load controls are different from one another in terms of power generation efficiencies of the permanent magnet type rotary electric machine in an output of the inverter.

At least while the engine is idling, the control device selectively adopts the plurality of types of load controls, and controls the switching parts of the inverter based on the selected load control. Each of the plurality of types of load controls directs the permanent magnet type rotary electric machine to produce a load on forward rotation of the crankshaft. A load is thus produced on forward rotation of the crankshaft while the engine is idling.

The amount of power generated by the permanent magnet type rotary electric machine and outputted via the inverter in at least part of a time period during which a highest power generation efficiency load control is applied among the plurality of types of load controls is greater than power consumed by the power consuming apparatus. In this case, power of the permanent magnet type rotary electric machine, which is outputted via the inverter, is charged into the battery. Application of the highest power generation efficiency load control allows rotational power of the crankshaft to be converted into electric power with a high efficiency, to charge the battery. This makes it possible that the battery is charged with high power even when the rotation speed is relatively low, for example, even during idling. As a result, high rotational power corresponding to the power charged in the battery is inputted from the crankshaft to the permanent magnet type rotary electric machine. This enables the permanent magnet type rotary electric machine to apply a high load to rotation of the crankshaft.

The amount of power generated by the permanent magnet type rotary electric machine and outputted via the inverter in at least part of a time period during which a lowest power generation efficiency load control is applied among the plurality of types of load controls is less than power consumed by the power consuming apparatus. In this case, power of the permanent magnet type rotary electric machine, which is outputted via the inverter, is not charged into the battery. The power consuming apparatus operates while consuming power charged in the battery. Thus, the battery is in a discharged state. Here, unlike when the permanent magnet type rotary electric machine functions as a motor, power discharged from the battery is suppressed to or below power consumed by the power consuming apparatus.

When the power generation efficiency is low, the permanent magnet type rotary electric machine may sometimes fail to output power at the level that charges the battery. In the lowest power generation efficiency load control, the ratio of power inputted from the engine to the permanent magnet type rotary electric machine to power outputted from the permanent magnet type rotary electric machine via the inverter is higher than in any other types of load controls. This is why the permanent magnet type rotary electric machine applies a high load to rotation of the crankshaft when the power generation efficiency is low.

In at least part of a time period during which the lowest power generation efficiency load control is applied, the battery is not charged. In a time period during which the battery is not charged, the power consuming apparatus consumes power of the battery. As a result, the charge level of the battery becomes no longer the full-charge level. Thus, when the load control is switched to the highest power generation efficiency load control, the permanent magnet type rotary electric machine is able to supply generated power to the battery. That is, when the load control is switched to the highest power generation efficiency load control, a high load corresponding to high power is applied to rotation of the crankshaft.

In the vehicle, while the engine is idling, the plurality of types of load controls are selectively adopted, and the switching parts of the inverter are controlled based on the selected load control. The switching parts of the inverter are controlled under load control while the engine is idling. Therefore, a load is produced on forward rotation of the crankshaft while the engine is idling.

In either of the highest power generation efficiency load control and the lowest power generation efficiency load control, a high load is applied to rotation of the crankshaft, as compared with when, for example, no load control is performed on the permanent magnet type rotary electric machine.

While the engine is idling, a high load is applied to rotation of the crankshaft. This suppresses an increase in the rotation speed of the crankshaft, even though the amount of mixed gas supplied to the engine increases. Thus, the rotation of the crankshaft is stabilized. Moreover, this suppresses occurrence of a situation where the permanent magnet type rotary electric machine functions as a motor and rotates the crankshaft while the engine is idling.

Accordingly, the vehicle is able to ensure generated power while ensuring stability of engine rotation.

The vehicle, in which preferably the control device switches a load control to be applied for controlling the switching parts by selectively adopting a load control of controlling the plurality of switching parts based on a vector control scheme which serves as a highest power generation efficiency load control and a load control of controlling the plurality of switching parts based on a phase control scheme which serves as a lowest power generation efficiency load control, and controls the switching parts based on the selected load control.

In this configuration, the plurality of switching parts are controlled based on a vector control scheme which serves as a highest power generation efficiency load control. The vector control switches on/off states of the switching parts such that a voltage outputted from the permanent magnet type rotary electric machine is raised to a voltage higher than the battery voltage. The vector control is also able to control current and voltage of the permanent magnet type rotary electric machine so as to obtain an enhanced power factor. This allows the battery to be charged with a high power generation efficiency even when the rotation speed of the crankshaft is low during idling. It is therefore possible to apply a high load to rotation of the crankshaft even when the rotation speed of the crankshaft is low during idling.

The phase control scheme has a power generation efficiency lower than that of the vector control scheme. The control device is able to apply a load caused by the low power generation efficiency to the rotation speed of the crankshaft.

The vehicle, in which preferably the permanent magnet type rotary electric machine includes windings that are electrically connected to the inverter, and
the control device switches a load control to be applied for controlling the switching parts by selectively adopting a load control of controlling the plurality of switching parts based on a vector control scheme which serves as a highest power generation efficiency load control and a load control of directing the plurality of switching parts to short-circuit the windings which serves as a lowest power generation efficiency load control, and controls the switching parts based on the selected load control.

In this configuration, the plurality of switching parts are controlled based on a vector control scheme which serves as a highest power generation efficiency load control. The vector control switches on/off states of the switching parts such that a voltage outputted from the permanent magnet type rotary electric machine is raised to a voltage higher than the battery voltage. The vector control is also able to control current and voltage of the permanent magnet type rotary electric machine so as to obtain an enhanced power factor. This allows the battery to be charged with a high power generation efficiency even when the rotation speed of the crankshaft is low during idling. It is therefore possible to apply a high load to rotation of the crankshaft even when the rotation speed of the crankshaft is low during idling.

In the control based on short-circuit of the windings, on the other hand, a current output from the permanent magnet type rotary electric machine via the inverter is not implemented for a short-circuited winding. Thus, the control based on short-circuit of the windings has a further lower power generation efficiency. In the control based on short-circuit of the windings, power generated in the windings is used to hinder rotation of the crankshaft. In the load control having the lowest efficiency, therefore, an increased load is applied to rotation of the crankshaft by short-circuiting the windings. In this configuration, both the load control based on the vector control scheme and the load control based on short-circuit of the windings produce a high load to forward rotation of the crankshaft while the engine is idling.

Furthermore, an increased amount of power is discharged from the battery in a time period during which the load control based on short-circuit of the windings is applied. As a result, in the load control based on the vector control which has the highest power generation efficiency, a higher load is applied to rotation of the crankshaft. This makes it possible to ensure generated power while ensuring stability of engine rotation with an increased reliability.

The vehicle, in which preferably the permanent magnet type rotary electric machine includes windings that are electrically connected to the inverter, and
the control device switches a load control to be applied for controlling the switching parts by selectively adopting a load control of controlling the plurality of switching parts based on a phase control scheme which serves as a highest power generation efficiency load control and a load control of directing the plurality of switching parts to short-circuit the windings which serves as a lowest power generation efficiency load control, and controls the switching parts based on the selected load control.

In this configuration, the plurality of switching parts are controlled based on a phase control scheme which serves as a highest power generation efficiency load control. In this case, the battery is charged. In the control based on short-circuit of the windings, on the other hand, a current output from the permanent magnet type rotary electric machine via the inverter is not implemented for a short-circuited winding. In the control based on short-circuit of the windings, a high load is applied to rotation of the crankshaft. In this configuration, both the load control based on the vector control scheme and the load control based on short-circuit of the windings are performed to produce a high load to forward rotation of the crankshaft while the engine is idling.

Furthermore, an increased amount of power is discharged from the battery in a time period during which the load control based on short-circuit of the windings is applied. As a result, in the load control based on the vector control which has the highest power generation efficiency, a higher load is applied to rotation of the crankshaft. This makes it possible to ensure generated power while ensuring stability of engine rotation with an increased reliability.

The vehicle, in which preferably the permanent magnet type rotary electric machine includes windings that are electrically connected to the inverter, and
the control device switches a load control to be applied for controlling the switching parts by selectively adopting a load control of controlling the plurality of switching parts based on a vector control scheme which serves as a highest power generation efficiency load control, a load control of directing the plurality of switching parts to short-circuit the windings which serves as a lowest power generation efficiency load control, and a load control of controlling the plurality of switching parts based on a phase control scheme which serves as a load control having a power generation efficiency lower than that of the highest power generation efficiency load control and higher than that of the lowest power generation efficiency load control, and controls the switching parts based on the selected load control.

In this configuration, the plurality of switching parts are controlled based on a vector control scheme which serves as a highest power generation efficiency load control. In this case, the battery is charged. In the control based on short-circuit of the windings which serves as a lowest power generation efficiency load control, on the other hand, a current output from the permanent magnet type rotary electric machine via the inverter is not implemented for a short-circuited winding. In the control based on short-circuit of the windings, a high load is applied to rotation of the crankshaft. Moreover, the control based on the phase control scheme is additionally performed as a load control having a power generation efficiency lower than that of the highest power generation efficiency load control and higher than that of the lowest power generation efficiency load control. This enables a control more precisely adapted to the engine state.

The vehicle, in which preferably the permanent magnet type rotary electric machine includes windings that correspond to a plurality of phases, respectively, and
in the load control of directing the plurality of switching parts to short-circuit the windings, the control device directs the plurality of switching parts to short-circuit windings corresponding to all of the plurality of phases.

In this configuration, the load control based on short-circuit of the windings is performed so as to short-circuit windings corresponding to all of the plurality of phases of the permanent magnet type rotary electric machine. A current output from the permanent magnet type rotary electric machine via the inverter is not implemented for windings corresponding to all of the phases of the permanent magnet type rotary electric machine. Thus, the control based on short-circuit of the windings has a further lower power generation efficiency. The control based on short-circuit of the windings corresponding to all of the plurality of phases provides an increased hindrance to rotation of the crankshaft. Accordingly, this configuration is able to ensure generated power while ensuring stability of engine rotation with an increased reliability.

The vehicle of the present teaching is a machine that transports persons or things. The vehicle includes a vehicle with a wheel serving as a drive member for driving the vehicle. Examples of the vehicle include straddled vehicles. Examples of the straddled vehicle include motorcycles, motor tricycles, and ATVs (All-Terrain Vehicles). Examples of the vehicle include four-wheel vehicles. The vehicle also includes a vessel with a propeller serving as a drive member. The vehicle of the present teaching is, for example, configured such that rotational power is outputted from an engine to a drive member through a power transmission path that extends from a crankshaft of the engine to the drive member. The vehicle may further be configured such that rotational power is outputted to the drive member by the permanent magnet type rotary electric machine functioning as a motor.

The engine of the present teaching is an internal combustion engine. The engine of the present teaching includes a single-cylinder engine with one cylinder, and a two-cylinder engine with two cylinders. Examples of the two-cylinder engine include a straight double-cylinder engine, a parallel double-cylinder engine, a V-type double-cylinder engine, a horizontal opposed double-cylinder engine, and the like. The engine of the present teaching includes a crankshaft. The engine of the present teaching includes a cylinder, a piston arranged in the cylinder so as to be movable to and fro, and a connecting rod coupled to the piston and the crankshaft.

The engine of the present teaching is a four-stroke engine. When operating, the four-stroke engine repeats an intake stroke, a compression stroke, a combustion stroke (expansion stroke), and an exhaust stroke.

The permanent magnet type rotary electric machine of the present teaching is a rotary electric machine including a permanent magnet. The permanent magnet type rotary electric machine of the present teaching includes a stator and a rotor. The rotor of the permanent magnet type rotary electric machine of the present teaching includes a permanent magnet. The rotor of the permanent magnet type rotary electric machine of the present teaching includes no winding. The stator of the permanent magnet type rotary electric machine of the present teaching includes windings. The permanent magnet type rotary electric machine of the present teaching includes windings corresponding to a plurality of phases. The permanent magnet type rotary electric machine of the present teaching may include windings corresponding to two phases, four phases, or more, for example. The permanent magnet type rotary electric machine of the present teaching, however, is able to easily perform a vector control and a phase control when provided with windings corresponding to three phases, for example. The windings of the stator are wound on a stator core. The rotor is rotated with the permanent magnet facing the stator core with an air gap therebetween. The permanent magnet type rotary electric machine of the present teaching includes a rotary electric machine of radial gap type and a rotary electric machine of axial gap type. The rotary electric machine of radial gap type, which is the permanent magnet type rotary electric machine of the present teaching, includes a rotary electric machine of outer rotor type and a rotary electric machine of inner rotor type, the rotary electric machine of outer rotor type provided with a rotor that rotates outside a stator, the rotary electric machine of inner rotor type provided with a rotor that rotates inside a stator.

The permanent magnet type rotary electric machine of the present teaching generates power. The permanent magnet type rotary electric machine of the present teaching includes a permanent magnet type rotary electric machine having a function as a motor and a permanent magnet type rotary electric machine not having a function as a motor. The permanent magnet type rotary electric machine of the present teaching is, for example, arranged outside a power transmission path that extends from a crankshaft to a drive member (a wheel, a propeller, or the like).

The battery of the present teaching is a chargeable battery. The battery of the present teaching is charged with power generated by the permanent magnet type rotary electric machine. The battery of the present teaching is mounted to a vehicle. The battery of the present teaching is able to discharge power.

The power consuming apparatus of the present teaching is an apparatus mounted to a vehicle and configured to operate while consuming power. The power consuming apparatus operates while consuming power generated by the permanent magnet type rotary electric machine or power charged in the battery. The power consuming apparatus includes so-called accessories. The power consuming apparatus includes accessories provided to the engine, for example. The accessories provided to the engine include, for example, a fuel pump, a spark plug, and a fuel injector device. The power consuming apparatus includes, for example, vehicle's illumination equipment, display device, and heater. The power consuming apparatus also includes a rotary electric machine for driving the crankshaft or a propulsion unit of the vehicle, separately from the above-described permanent magnet type rotary electric machine. The power consuming apparatus also includes, for example, a communication device and a navigation device electrically connected to the vehicle.

The inverter of the present teaching includes the plurality of switching parts by which a current outputted from the permanent magnet type rotary electric machine to the battery and the power consuming apparatus is controlled. The switching parts are transistors, for example. The switching parts include FETs (Field Effect Transistors), thyristors, and IGBTs (Insulated Gate Bipolar Transistors), for example. The functions of the inverter include a rectification function. The inverter has a function for outputting a DC, for example. The inverter controls a current outputted from the permanent magnet type rotary electric machine to the battery and the power consuming apparatus. The inverter includes a bridge inverter composed of a plurality of switching parts, for example.

The control device of the present teaching includes a control device configured to control operations of the engine, for example. The control device of the present teaching, however, also includes a control device different from a device configured to control operations of the engine, for example.

The controls performed by the control device of the present teaching include, for example, a control of directing the permanent magnet type rotary electric machine to function as a motor. It, however, is not always necessary that the controls performed by the control device of the present teaching include a control of directing the permanent magnet type rotary electric machine to function as a motor.

In the present teaching, idling means a state where the engine is operating in such a manner that rotational power of the crankshaft does not contribute to running of the vehicle. For example, in a case of the vehicle including a clutch that intermittently transmits rotational power of the crankshaft, idling of the present teaching means a state where the clutch is off.

The load control of the present teaching is a control that directs the permanent magnet type rotary electric machine to produce a load on forward rotation of the crankshaft. The load control includes a plurality of types of controls that are different from one another in terms of power generation efficiencies of the permanent magnet type rotary electric machine. The power generation efficiency of the permanent magnet type rotary electric machine is the ratio of electric power outputted from the permanent magnet type rotary electric machine to mechanical power inputted to the permanent magnet type rotary electric machine. The power generation efficiency of the permanent magnet type rotary electric machine in the output of the inverter of the present teaching is a power generation efficiency regarding electric power outputted from the permanent magnet type rotary electric machine via the inverter. This is because the power generation efficiency of the permanent magnet type rotary electric machine is controlled by the inverter. In the present teaching, comparison among power generation efficiencies of the permanent magnet type rotary electric machine is made based on, for example, the output/input power ratio under the same condition of the rotation speed of the crankshaft. In the present teaching, comparison among power generation efficiencies of the permanent magnet type rotary electric machine is made based on, for example, the output/input power ratio with the rotation speed of the crankshaft obtained when the engine is idling.

The plurality of types of load controls by which the control device controls the switching parts include, for example, a control based on a vector control scheme, a control based on a phase control scheme, and a control based on short-circuit of the windings. The plurality of types of load controls include, for example, only two of a control based on a vector control scheme, a control based on a phase control scheme, and a control based on short-circuit of the windings. The plurality of types of load controls include, for example, three or more of a control based on a vector control scheme, a control based on a phase control scheme, and a control based on short-circuit of the windings. It may be acceptable that the plurality of types of load controls include a control other than a control based on a vector control scheme, a control based on a phase control scheme, and a control based on short-circuit of the windings.

Types of load controls are categorized according to control schemes, for example. An advanced angle control in the phase control scheme and an delay angle control in the phase control scheme are in common in that each of them is in the phase control scheme. Thus, the angle advance control in the phase control scheme and the angle retardation control in the phase control scheme are categorized as one type of load control called a control based on a phase control scheme. A single-phase short-circuit in which windings corresponding to one of the plurality of phases are short-circuited and an all-phase short-circuit in which windings corresponding to all of the plurality of phases are short-circuited are in common in that each of them is a control based on short-circuit of the windings. Thus, the single-phase short-circuit and the all-phase short-circuit are categorized as one type of load control called a control based on short-circuit of the windings.

Power consumed by the power consuming apparatus is variable depending on, for example, conditions of use of the power consuming apparatus. The amount of power generated by the permanent magnet type rotary electric machine during application of one type of load control is variable depending on the state of running of the vehicle and contents of the applied load control. Thus, power consumed by the power consuming apparatus, and the amount of power generated by the permanent magnet type rotary electric machine during application of one type of load control are values variable from time to time. The relationship between the amount of power generated by the permanent magnet type rotary electric machine and the amount of power consumed by the power consuming apparatus is determined by contrast between the amount of power generated by the permanent magnet type rotary electric machine and the power consumed by the power consuming apparatus in the same time period.

As for the relationship among power generation efficiencies obtained by the control based on the vector control scheme, the control based on the phase control scheme, and the control based on short-circuit of the windings, for example, a highest power generation efficiency load control is the control based on the vector control scheme, and a lowest power generation efficiency load control is the control based on short-circuit of the windings. The control based on the vector control scheme is able to provide an excellent power generation efficiency. In a case where, for example, the plurality of types of load controls Include the control based on the vector control scheme, the control based on the vector control scheme serves as the highest power generation efficiency load control. On the other hand, the control based on short-circuit of the windings, which causes no power generation, has a low power generation efficiency. In a case where, for example, the plurality of types of load controls include the control based on short-circuit of the windings, the control based on short-circuit of the windings serves as the lowest power generation efficiency load control.

The vector control scheme adopts 180-degree conduction. The vector control scheme is a control method in which a current of the permanent magnet type rotary electric machine 20 is divided into d-axis component and q-axis component, the d-axis component corresponding to a magnetic flux direction of a magnet, the q-axis component being orthogonal to the magnetic flux direction in terms of electrical angle. The q-axis component is a component that affects a torque load of the permanent magnet type rotary electric machine 20. The vector control is a control in which each phase of the multi-phase stator windings is rendered conducting without any pause of the conduction. The vector control is a sine wave conduction control. The vector control is a control in which conduction is effected such that a sinusoidal current flows in each phase of the multi-phase stator windings. Performing on/off-operation of the plurality of switching parts at timings based on the vector control causes a sinusoidal current to flow in each of the multi-phase stator windings. Power generation under the vector control is achieved by, for example, drawing a current in synchronization with a sinusoidal wave of an induced voltage of the stator windings and in the direction of the induced voltage. Here, a sinusoidal current and a sinusoidal voltage mean current and voltage having a sinusoidal waveform. The sinusoidal current contains, for example, distortions and ripples caused by the on/off-operation of the switching parts. In the vector control, each of the plurality of switching parts is controlled by a pulse-width-modulated (PWM) signal. A pulse period in the pulse width modulation is shorter than a period of the induced voltage of each phase of the stator windings. That is, in the vector control scheme, the control device controls on/off of the plurality of switching parts in accordance with a pulse signal whose period is shorter than the period of the induced voltage of the stator windings of the permanent magnet type rotary electric machine.

The phase control is a control in which the timings of conducting the plurality of switching parts included in the inverter are advanced or retarded. The phase control is a control different from the above-described vector control. In the phase control, the control device performs on/off-operation of each of the plurality of switching parts with a period equal to the period of the induced voltage of the stator windings. In the phase control, the control device turns on/off each of the plurality of switching parts once in a period that is equal to the period of the induced voltage of the stator windings. The control device controls the phase of on/off-operation of each of the plurality of switching parts relative to the induced voltage of the stator windings.

The control based on short-circuit of the windings is a control in which a switching part connected to corresponding windings is short-circuited to a power source. The control based on short-circuit of the windings includes a control of short-circuiting windings corresponding to part of the phases of multi-phase windings and a control of short-circuiting windings corresponding to all of the phases of multi-phase windings.

The control according to the battery charge level of the present teaching includes, for example, a control according to the battery voltage and a control according to an output current of the battery as well as the battery voltage.

### [EFFECTS OF THE INVENTION]

The present teaching is able to ensure generated power while ensuring stability of engine rotation.

### [BRIEF DESCRIPTION OF THE DRAWINGS]

[FIG. 1] FIG. 1 shows an external appearance of a vehicle according to an embodiment of the present teaching.
[FIG. 2] FIG. 2 is a partial cross-sectional view schematically showing an outline configuration of an engine unit shown in FIG. 1.
[FIG. 3] FIG. 3 is a cross-sectional view of a starter generator shown in FIG. 2, as sectioned perpendicular to Its rotation axis line.
[FIG. 4] FIG. 4 is a block diagram outlining an electrical configuration of the vehicle shown in FIG. 1.
[FIG. 5] FIG. 5 is a flowchart illustrating operations of a vehicle.
[FIG. 6] FIG. 6 shows exemplary current and voltage waveforms in a vector control.
[FIG. 7] FIG. 7 is a graph schematically showing an example of the relationship between a battery voltage and the amount of power generated by a permanent magnet type rotary electric machine at a time of engine idling.
[FIG. 8] FIG. 8 contains graphs showing a change in the rotation speed of a crankshaft, a change in the battery voltage, and a change in the output current of the permanent magnet type rotary electric machine in idling.
[FIG. 9] FIG. 9 shows exemplary current and voltage waveforms In a phase control.
[FIG. 10] FIG. 10 Is a graph schematically showing an example of the relationship between a battery voltage and the amount of power generated by a permanent magnet type rotary electric machine at a time of idling according to a second embodiment.
[FIG. 11] FIG. 11 is a flowchart illustrating operations of a vehicle according to an example not part of the present invention.

### [PREFERRED EMBODIMENTS]

Hereunder, the present teaching is described based on preferred embodiments with reference to the drawings.

### [First Embodiment]

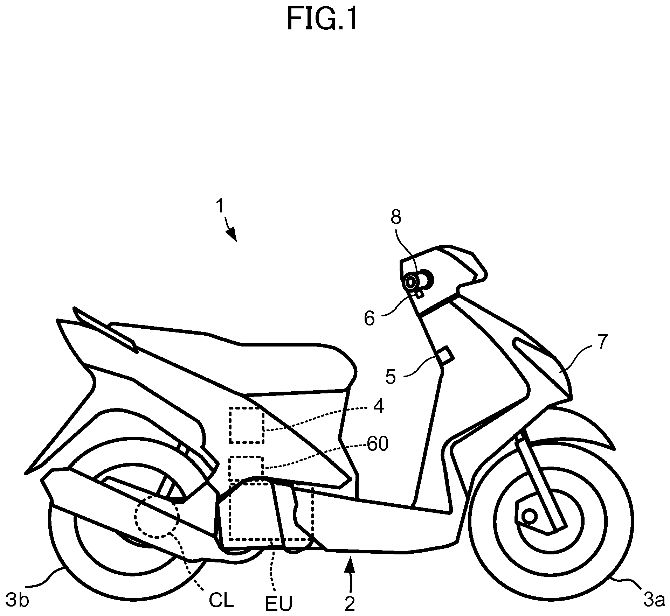

FIG. 1 shows an external appearance of a vehicle according to a first embodiment of the present teaching.

A vehicle 1 shown in FIG. 1 is a vehicle with wheels. The vehicle 1 includes a vehicle body 2 and wheels 3a, 3b. The vehicle 1 is, to be specific, a straddled vehicle. The vehicle 1 is a motorcycle.

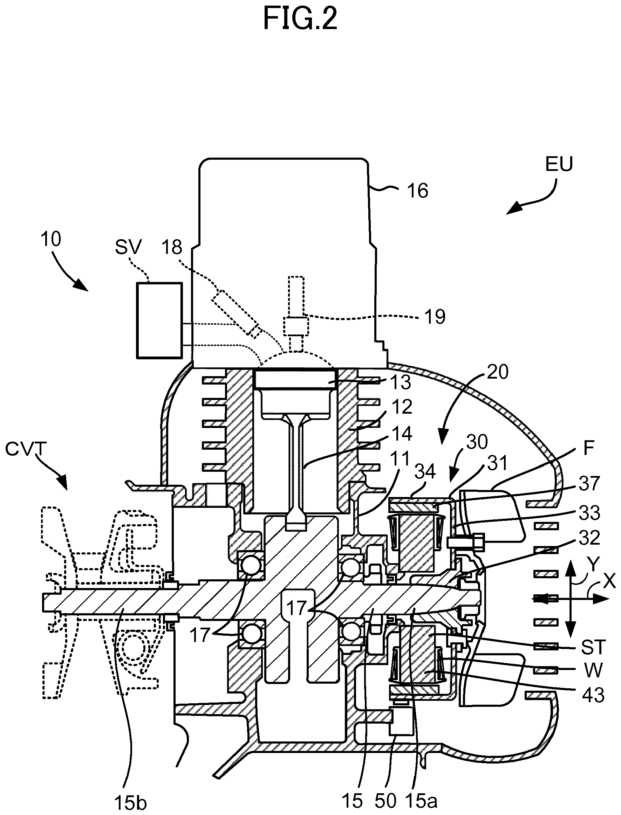

The vehicle 1 includes an engine unit EU. The engine unit EU includes an engine 10 and a permanent magnet type rotary electric machine 20 (see FIG. 2). Thus, the vehicle 1 includes the engine 10 and the permanent magnet type rotary electric machine 20.

The rear wheel 3b receives rotational power outputted from the engine 10, to drive the vehicle 1. The wheel 3b corresponds to an example of the drive member.

The vehicle 1 includes a main switch 5. The main switch 5 is a switch for supplying power to each part of the vehicle 1. The vehicle 1 includes a starter switch 6. The starter switch 6 is a switch for starting the engine 10. The vehicle 1 includes an acceleration operator 8. The acceleration operator 8 is an operation element for instructing that the vehicle 1 be accelerated.

The vehicle 1 includes a headlight 7. The vehicle 1 includes a battery 4 that stores power. The vehicle 1 includes a control device 60 that controls each part of the vehicle 1.

FIG. 2 is a partial cross-sectional view schematically showing an outline configuration of the engine unit EU shown in FIG. 1.

The engine 10 includes a crank case 11, a cylinder 12, a piston 13, a connecting rod 14, and a crankshaft 15. The piston 13 is arranged in the cylinder 12 such that the piston 13 is freely movable to and fro.

The crankshaft 15 is rotatably arranged in the crank case 11. The connecting rod 14 connects the piston 13 and the crankshaft 15 to each other. A cylinder head 16 is attached to an upper portion of the cylinder 12. The cylinder 12, the cylinder head 16, and the piston 13 define a combustion chamber. The crankshaft 15 is supported on the crank case 11 via a pair of bearings 17 in a freely rotatable manner. The permanent magnet type rotary electric machine 20 is attached to one end portion 15a of the crankshaft 15.
A transmission CVT is attached to the other end portion 15b of the crankshaft 15. The transmission CVT is configured to change the gear ratio which is the ratio of an output rotation speed to an input rotation speed. The transmission CVT is configured to change the gear ratio corresponding to the rotation speed of the wheel relative to the rotation speed of the crankshaft 15.

The vehicle 1 includes a clutch CL (see FIG. 1). The clutch CL is connected to the transmission CVT. The clutch CL is a centrifugal clutch. The clutch CL switches between states of allowing and blocking transmission of rotational power from the crankshaft 15 to the wheel 3b which serves as a drive member. The clutch CL switches between the states of allowing and blocking transmission in accordance with the rotation speed of the crankshaft 15. When the rotation speed of the crankshaft 15 is less than a predetermined threshold, the clutch CL is in a blocking state. When the rotation speed of the crankshaft 15 is more than a predetermined threshold, the clutch CL is in a transmitting state. The predetermined threshold referred to herein may not always need to be a single fixed value in a strict sense. The predetermined threshold may be a value variable depending on running conditions, environmental conditions such as ambient temperature, and the like. The blocking state means a state in which transmission of rotational power from the crankshaft to the drive member is not performed at all. The transmitting state means a state in which transmission of rotational power from the crankshaft to the drive member is performed, including a state in which transmission of partial rotational power is performed.

The engine 10 is provided with a throttle valve SV and a fuel injector device 18. The throttle valve SV adjusts the amount of air to be supplied to the combustion chamber. The degree of opening of the throttle valve SV is adjusted in accordance with an operation on the acceleration operator 8 (see FIG. 1). The fuel injector device 18 injects a fuel, to supply the fuel to the combustion chamber. The engine 10 is also provided with a spark plug 19.

The engine 10 is an internal combustion engine. The engine 10 is supplied with a fuel. The engine 10 performs a combustion operation in which the fuel is combusted, to output rotational power. The rotational power is outputted to the outside of the engine 10 via the crankshaft 15.

The throttle valve SV adjusts rotational power of the engine 10 by adjusting the amount of air to be supplied to the combustion chamber. The amount of air to be supplied to the combustion chamber is adjusted in accordance with the degree of opening of the throttle valve SV. The degree of opening of the throttle valve SV is adjusted in accordance with an operation on the acceleration operator 8 (see FIG. 1).

The fuel injector device 18 adjusts rotational power outputted from the engine 10 by adjusting the amount of fuel supply. The fuel injector device 18 is controlled by the control device 60. The fuel injector device 18 is controlled so as to supply an amount of fuel corresponding to the amount of air supplied to the engine 10.

The engine 10 outputs rotational power via the crankshaft 15. Rotational power of the crankshaft 15 is transmitted to the wheel 3b via the transmission CVT and the clutch CL (see FIG. 1). The vehicle 1 is driven by the wheel 3b that receives rotational power outputted from the engine 10 via the crankshaft 15.

The engine 10 is a single-cylinder four-stroke engine. The engine 10 has, during four strokes, a high-load region in which a high load is put on rotation of the crankshaft 15 and a low-load region in which a load put on rotation of the crankshaft 15 is lower than that of the high-load region. The high-load region means a region in one combustion cycle of the engine 10 where a load torque is higher than an average value of the load torque over the one combustion cycle. The low-load region means a region in one combustion cycle of the engine 10 where a load torque is lower than an average value of the load torque over the one combustion cycle. From the viewpoint of the rotation angle of the crankshaft 15, the low-load region is wider than the high-load region. During forward rotation, the engine 10 repeats four strokes, namely, an intake stroke, a compression stroke, an expansion stroke, and an exhaust stroke. The compression stroke overlaps the high-load region.

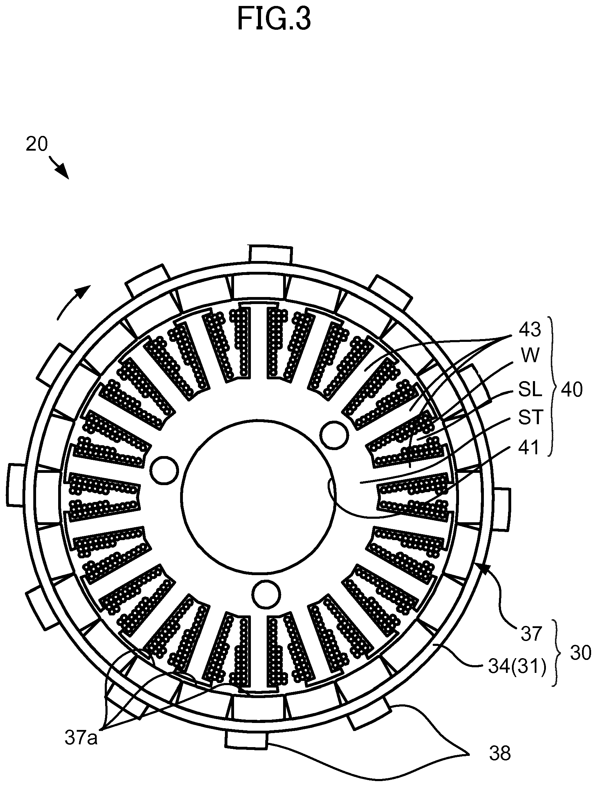

FIG. 3 is a cross-sectional view of the permanent magnet type rotary electric machine 20 shown in FIG. 2, as sectioned perpendicular to its rotation axis line. The permanent magnet type rotary electric machine 20 is described with reference to FIGS. 2 and 3.

The permanent magnet type rotary electric machine 20 is a three-phase brushless generator of permanent magnet type. The permanent magnet type rotary electric machine 20 functions also as a three-phase brushless motor of permanent magnet type.

The permanent magnet type rotary electric machine 20 includes a rotor 30 and a stator 40. The permanent magnet type rotary electric machine 20 of this embodiment is of radial gap type. The permanent magnet type rotary electric machine 20 is of outer rotor type. That is, the rotor 30 is an outer rotor, and the stator 40 is an inner stator.

The rotor 30 Includes a rotor body part 31. The rotor body part 31 is made of, for example, a ferromagnetic material. The rotor body part 31 is in the shape of a cylinder with a bottom. The rotor body part 31 includes a cylindrical boss portion 32, a disk-shaped bottom wall portion 33, and a back yoke portion 34 having a cylindrical shape. The bottom wall portion 33 and the back yoke portion 34 are integrally formed. Here, it may also be acceptable that the bottom wall portion 33 and the back yoke portion 34 are formed as separate parts. The bottom wall portion 33 and the back yoke portion 34 are secured to the crankshaft 15 via the cylindrical boss portion 32. A winding to which a current is supplied is not provided in the rotor 30.

The rotor 30 includes a permanent magnet part 37. The rotor 30 includes a plurality of magnetic pole portions 37a. The plurality of magnetic pole portions 37a are formed by the permanent magnet part 37. The plurality of magnetic pole portions 37a are provided on an inner circumferential surface of the back yoke portion 34. In this embodiment, the permanent magnet part 37 includes a plurality of permanent magnets. The plurality of magnetic pole portions 37a are provided in the plurality of permanent magnets, respectively.

The permanent magnet part 37 may alternatively be configured as a single annular permanent magnet. In such a configuration, the single permanent magnet is magnetized such that the plurality of magnetic pole portions 37a appear side by side on the inner circumferential surface.

The plurality of magnetic pole portions 37a are provided such that N pole and S pole appear alternately with respect to a circumferential direction of the permanent magnet type rotary electric machine 20. In this embodiment, the number of magnetic poles of the rotor 30 opposed to the stator 40 is twenty-four. The number of magnetic poles of the rotor 30 means the number of magnetic poles opposed to the stator 40. No magnetic material is arranged between the magnetic pole portions 37a and the stator 40.

The magnetic pole portions 37a are provided outside the stator 40 with respect to the radial direction of the permanent magnet type rotary electric machine 20. The back yoke portion 34 is provided outside the magnetic pole portions 37a with respect to the radial direction. The number of magnetic pole portions 37a included in the permanent magnet type rotary electric machine 20 is more than the number of teeth 43.

The rotor 30 may be of interior permanent magnet type (IPM type) in which the magnetic pole portions 37a are embedded in a magnetic element, but it preferably is of surface permanent magnet type (SPM type) in which the magnetic pole portions 37a are exposed from a magnetic element as illustrated in this embodiment.

A cooling fan F is provided to the bottom wall portion 33 of the rotor 30.

The stator 40 includes a stator core ST and a plurality of stator windings W. The stator core ST includes a plurality of teeth 43 arranged at intervals with respect to the circumferential direction. The plurality of teeth 43 integrally extend from the stator core ST toward radially outside. In this embodiment, eighteen teeth 43 in total are arranged at intervals with respect to the circumferential direction. In other words, the stator core ST has eighteen slots SL in total that are arranged at intervals with respect to the circumferential direction. The teeth 43 are arranged at equal intervals with respect to the circumferential direction.

The number of magnetic pole portions 37a included in the rotor 30 is more than the number of teeth 43. The number of magnetic pole portions is equal to 4/3 of the number of slots.

The stator winding W is wound around each of the teeth 43. That is, the multi-phase stator windings W are arranged through the slots SL. In the state shown in FIG. 3, the stator windings W are in the slots SL. Each of the multi-phase stator windings W belongs to any of U-phase, V-phase, and W-phase. The stator windings W are arranged in the order of U-phase, V-phase, and W-phase, for example. A manner in which the stator winding W is wound may be, though not particularly limited, either concentrated winding or distributed winding, and it preferably is concentrated winding.

The rotor 30 includes, on its outer surface, a plurality of detection object parts 38 for detection of the rotation position of the rotor 30. Magnetic effects are used to detect the plurality of detection object parts 38. The plurality of detection object parts 38 arranged at intervals with respect to the circumferential direction are provided on the outer surface of the rotor 30. The detection object parts 38 are made of a ferromagnetic material.

A rotor position detection device 50 is a device that detects the position of the rotor 30. The rotor position detection device 50 is provided at a position allowed to be opposed to the plurality of detection object parts 38.

The permanent magnet type rotary electric machine 20 is connected to the crankshaft 15 of the engine 10. More specifically, the permanent magnet type rotary electric machine 20 is connected to the crankshaft 15 such that the rotor 30 is rotated with its speed ratio fixed relative to the crankshaft 15.

In this embodiment, the rotor 30 is attached to the crankshaft 15 without interposition of a power transmission mechanism (such as a belt, a chain, a gear, a speed reducer, or a speed increaser). The rotor 30 is rotated with a speed ratio of 1:1 relative to the crankshaft 15. The permanent magnet type rotary electric machine 20 is configured such that the rotor 30 is driven in forward rotation during the combustion operation of the engine 10.

The permanent magnet type rotary electric machine 20 may be attached to the crankshaft 15 with interposition of a power transmission mechanism. The permanent magnet type rotary electric machine 20, however, is connected to the crankshaft 15 with interposition of neither a variable ratio transmission nor a clutch. In other words, the permanent magnet type rotary electric machine 20 is connected to the crankshaft 15 without interposition of a device having a variable input/output speed ratio.

In the present teaching, it is preferable that the rotation axis line of the permanent magnet type rotary electric machine 20 is substantially coincident with the rotation axis line of the crankshaft 15. It is also preferable that the permanent magnet type rotary electric machine 20 is attached to the crankshaft 15 without interposition of any power transmission mechanism, as illustrated in this embodiment.

At a time of engine start, the permanent magnet type rotary electric machine 20 drives the crankshaft 15 in forward rotation, to start the engine 10. In the combustion operation of the engine 10, the permanent magnet type rotary electric machine 20 is driven by the engine 10, to generate power. Thus, the permanent magnet type rotary electric machine 20 has both a function for driving the crankshaft 15 in forward rotation to start the engine 10 and a function for being driven by the engine 10 to generate power in the combustion operation of the engine 10. In at least part of a time period following the start of the engine 10, the permanent magnet type rotary electric machine 20 is driven in forward rotation by the crankshaft 15, to function as a generator.

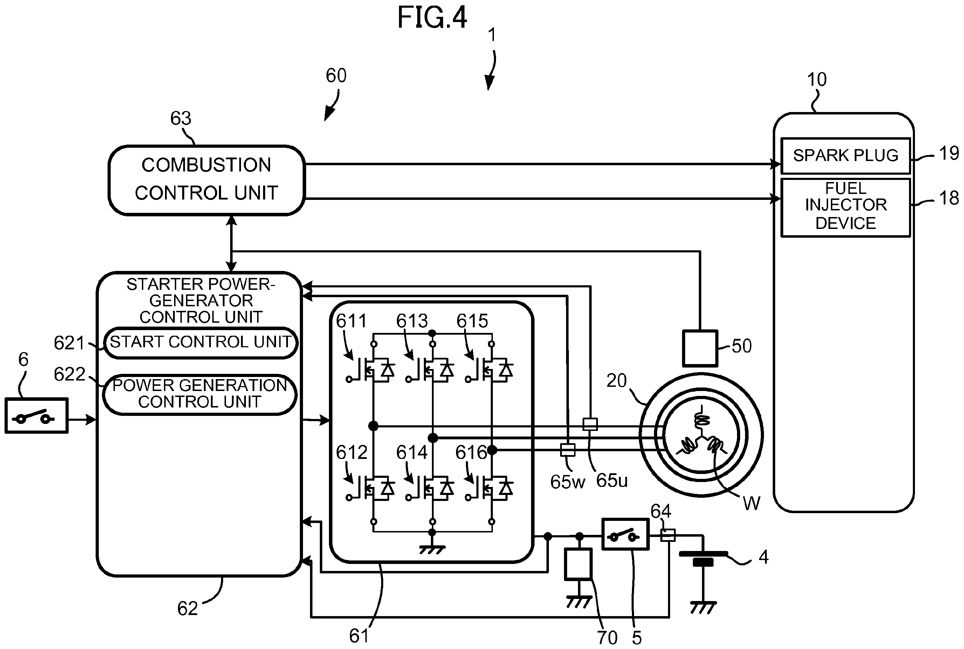

FIG. 4 is a block diagram outlining an electrical configuration of the vehicle 1 shown in FIG. 1.

The vehicle 1 includes an inverter 61. The control device 60 controls each part of the vehicle 1 including the inverter 61.

The permanent magnet type rotary electric machine 20 and the battery 4 are connected to the inverter 61. The battery 4 is supplied with a current from the permanent magnet type rotary electric machine 20. The battery 4 is charged with power generated by the permanent magnet type rotary electric machine 20. A power consuming apparatus 70 is also connected to the inverter 61 and the battery 4. The power consuming apparatus 70 consumes power when operating. The power consuming apparatus 70 includes the spark plug 19 and the fuel injector device 18. The power consuming apparatus 70 also includes the headlight 7, a fuel pump (not shown), and a display device.

The battery 4 is connected to the inverter 61 and the power consuming apparatus 70 via the main switch 5.

A current sensor 64 is provided on a line connecting the battery 4 to the inverter 61. The current sensor 64 detects a current flowing to the battery 4. On the line connecting the battery 4 to the inverter 61, the current sensor 64 is provided between the battery 4 and a branch point into the power consuming apparatus 70.

The inverter 61 includes a plurality of switching parts 611 to 616. In this embodiment, the inverter 61 includes six switching parts 611 to 616.

The switching parts 611 to 616 constitute a three-phase bridge inverter. The plurality of switching parts 611 to 616 are connected to the respective phases of the multi-phase stator windings W. More specifically, among the plurality of switching parts 611 to 616, every two switching parts that are connected in series constitute a half bridge. The half bridge corresponding to each phase is connected in parallel with the battery 4. Ones of the switching parts 611 to 616 constituting the half bridge of each phase are connected to the corresponding phase of the multi-phase stator windings W. Among the plurality of switching parts 611 to 616, the switching parts 612, 614, 616 connected to a ground line are referred to as lower-arm switching parts, and the switching parts 611, 613, 615 connected to a power source line are referred to as upper-arm switching parts.

The switching parts 611 to 616 selectively allow or block the passing of a current between the multi-phase stator windings W and the battery 4.

In more detail, when the permanent magnet type rotary electric machine 20 functions as a motor, switching between causing and stopping conduction of the multi-phase stator windings W is implemented by on/off-operation of the switching parts 611 to 616.

When the permanent magnet type rotary electric machine 20 functions as a generator, switching between allowing and blocking the passing of a current between each of the stator windings W and the battery 4 is implemented by on/off-operation of the switching parts 611 to 616. By switching on/off the switching parts 611 to 616 one after another, a control of a voltage and a rectification of a three-phase AC outputted from the permanent magnet type rotary electric machine 20 are performed. The switching parts 611 to 616 control a current outputted from the permanent magnet type rotary electric machine 20 to the battery 4 and the power consuming apparatus 70.

Each of the switching parts 611 to 616 has a switching element. The switching element is, for example, a transistor and in more detail, an FET (Field Effect Transistor). Here, instead of FETs, for example, thyristors and IGBTs (Insulated Gate Bipolar Transistors) are adoptable as the switching parts 611 to 616.

Current sensors 65u, 65w are provided on lines connecting the inverter 61 to the stator windings W. The current sensors 65u, 65w detect a two-phase current in the permanent magnet type rotary electric machine 20. The current sensors 65u, 65w are connected to the control device 60.

The fuel injector device 18, the spark plug 19, and the battery 4 are connected to the control device 60.

The control device 60 includes a starter power-generator control unit 62 and a combustion control unit 63.

The starter power-generator control unit 62 controls on/off-operation of each of the switching parts 611 to 616, to control the operation of the permanent magnet type rotary electric machine 20. The starter power-generator control unit 62 includes a start control unit 621 and a power generation control unit 622.

The combustion control unit 63 controls the spark plug 19 and the fuel injector device 18, to control the combustion operation of the engine 10. The combustion control unit 63 controls the spark plug 19 and the fuel injector device 18, to control rotational power of the engine 10.

The control device 60 is composed of a computer including a central processing unit (not shown) and a storage device (not shown). The central processing unit executes arithmetic processing based on a control program. The storage device stores data relating to programs and arithmetic operations.

The combustion control unit 63 and the starter power-generator control unit 62 including the start control unit 621 and the power generation control unit 622 are implemented by a computer (not shown) and a control program executable by the computer. Thus, below-described operations performed respectively by the combustion control unit 63 and the starter power-generator control unit 62 including the start control unit 621 and the power generation control unit 622 can be considered as operations performed by the control device 60. The starter power-generator control unit 62 and the combustion control unit 63 may be, for example, either configured as separate devices placed at a distance from each other, or integrated as a single device.

The starter switch 6 is connected to the control device 60. The starter switch 6 is actuated by a rider at a time of starting the engine 10. The starter power-generator control unit 62 of the control device 60 detects a charge level of the battery 4. The starter power-generator control unit 62 detects the charge level of the battery 4 by detecting the voltage and current of the battery 4.

The main switch 5 supplies power to the control device 60 in accordance with operations performed thereon.

The starter power-generator control unit 62 and the combustion control unit 63 of the control device 60 control the engine 10 and the permanent magnet type rotary electric machine 20. The starter power-generator control unit 62 controls the Inverter 61.

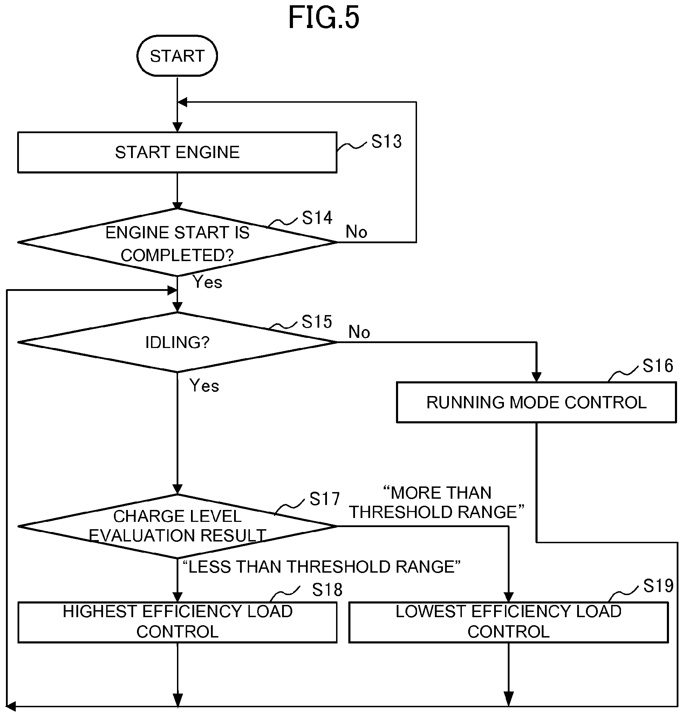

FIG. 5 is a flowchart illustrating operations of the vehicle 1.

The operations of the vehicle 1 are described with reference to FIGS. 4 and 5.

The operations of the vehicle 1 are controlled by the control device 60.

The control device 60 starts the engine 10 (S13). More specifically, when the main switch 5 is in on-state and the starter switch 6 is in on-state, the start control unit 621 of the starter power-generator control unit 62 starts the engine 10.

In more detail, the start control unit 621 directs the permanent magnet type rotary electric machine 20 to drive the crankshaft 15. The start control unit 621 performs on/off-operation of the plurality of switching parts 611 to 616 included in the inverter 61 such that a current for driving the rotor 30 in forward rotation is supplied to the multi-phase stator windings W. The permanent magnet type rotary electric machine 20 drives the crankshaft 15 accordingly. On the other hand, the combustion control unit 63 of the control device 60 directs the fuel injector device 18 to supply a fuel. The combustion control unit 63 directs the spark plug 19 to cause ignition.

The start control unit 621 determines whether or not start of the engine 10 is completed (S14). If start of the engine 10 is not completed (S14:No), the start control unit 621 and the combustion control unit 63 continue the fuel supply and the rotation of the crankshaft 15 driven by the permanent magnet type rotary electric machine 20 (S13). Here, the combustion control unit 63 continues the fuel supply even after start of the engine 10 is completed.

The start control unit 621 uses, for example, the rotation speed of the crankshaft 15 to determine the completion of start of the engine 10. The start control unit 621 obtains the rotation speed of the crankshaft 15 from, for example, a result of detection performed by the rotor position detection device 50.

The state where start of the engine 10 is completed (S14:Yes) is a state where the control device 60 has performed the combustion operation of the engine 10 with power supplied by the main switch 5.

Upon completion of start of the engine 10 (S14:Yes), the power generation control unit 622 of the control device 60 determines whether or not the engine 10 is idling (S15). The power generation control unit 622 determines whether or not the engine 10 is idling based on the rotation speed of the crankshaft 15. The power generation control unit 622 determines that the engine 10 is idling if the rotation speed of the crankshaft 15 is less than a threshold that brings the clutch CL into a state of blocking transmission of rotational power.

If the engine 10 is not idling (S15:No), the power generation control unit 622 performs a running mode control (S16).

In the running mode control of step S16, the power generation control unit 622 controls the inverter 61 such that power is generated in accordance with the rotating state of the permanent magnet type rotary electric machine 20. In the running mode control (S18), the power generation control unit 622 directs the inverter 61 to output a current to the permanent magnet type rotary electric machine 20, the current being based on the rotation speed of the engine 10. The output current is controlled such that the charge level of the battery 4 does not exceed a full-charge level.

While the engine 10 is idling (S15:Yes), the power generation control unit 622 of the control device 60 selectively adopts a plurality of types of load controls, and controls the switching parts 611 to 616 of the inverter 61 based on the selected load control. The control device 60 controls the permanent magnet type rotary electric machine 20 in this manner. In this embodiment, the plurality of types of load controls selected during idling include a highest efficiency load control (S18) and a lowest efficiency load control (S19). Each of the plurality of types of load controls including the highest efficiency load control and the lowest efficiency load control directs the permanent magnet type rotary electric machine 20 to cause a load on forward rotation of the crankshaft 15. The highest efficiency load control is a load control that provides the highest power generation efficiency among the plurality of types of load controls selectable during idling. The lowest efficiency load control is a load control that provides the lowest power generation efficiency among the plurality of types of load controls selectable during idling.

In this embodiment, the highest efficiency load control is a control (vector control) based on a vector control scheme, and the lowest efficiency load control is a control based on short-circuit of the stator windings W.

If the engine 10 is idling (S15:Yes), the control device 60 switches how to control the inverter 61 in accordance with the charge level of the battery 4. If the engine 10 is idling (S15:Yes), the control device 60 evaluates the charge level of the battery 4 relative to a predefined threshold range (S17). The control device 60 determines whether or not the charge level is less than the lower limit of the threshold range or the charge level is more than the upper limit of the threshold range. Otherwise, the control device 60 maintains the previous determination. The determination of the charge level has hysteresis characteristics.

The threshold range is a range of charge level that allows power for starting the engine 10 to be supplied at least to the permanent magnet type rotary electric machine 20. The threshold range is, for example, a range of level corresponding to the full charge of the battery 4.

The control device 60 identifies a voltage of the battery 4, as an index substantially indicative of the charge level of the battery 4. For example, the control device 60 identifies the voltage of the battery 4 relative to a voltage threshold range corresponding to the full charge. The charge level of the battery 4 is determined in this manner.

If the charge level of the battery 4 is less than the threshold range (S17: "Less than threshold range"), the control device 60 selects the highest efficiency load control as the control of the permanent magnet type rotary electric machine 20 to (S18). If the charge level of the battery 4 is more than the upper limit of the threshold range (S17: "More than threshold range"), the control device 60 selects the lowest efficiency load control as the control of the permanent magnet type rotary electric machine 20 (S19).

In the highest efficiency load control (S18), the power generation control unit 622 of the control device 60 controls the switching parts 611 to 616 based on the vector control scheme. Performing on/off-operation of the plurality of switching parts 611 to 616 at timings based on the vector control causes a sinusoidal current to flow in each of the multi-phase stator windings W. Power generation under the vector control is achieved by, for example, drawing a current in synchronization with a sinusoidal wave of an induced voltage of the stator windings W and in the direction of the induced voltage. The control device 60 controls on/off of the plurality of switching parts 611 to 616 in accordance with a pulse signal having a shorter period than the period of the induced voltage of the stator windings W of the permanent magnet type rotary electric machine 20.

In the vector control, the power generation control unit 622 obtains d-axis component and q-axis component based on currents Ufb, Wfb of the multi-phase stator windings W detected by the current sensors 65u, 65w and the position θ of the rotor 30 detected by the rotor position detection device 50. The control device 60 controls on/off timings of the plurality of switching parts 611 to 616 based on the components as corrected in accordance with a target value.

For the control, a method of detecting a current of a three-phase stator winding is also adoptable. For the control, a method without the position detection by the rotor position detection device 50 is also adoptable. For the control, a method of controlling the plurality of switching parts 611 to 616 without directly detecting a current of any phase of the stator windings is also adoptable. For controlling on/off timings, for example, a method of calculating an expression using input information, or a method of reading out and referring to a map (setting table) stored in a storage unit, is adoptable. The expression or the map may be included in a program.

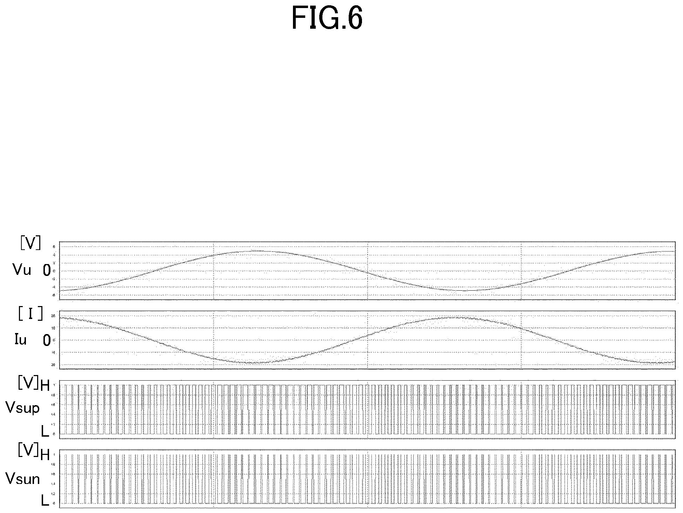

FIG. 6 shows exemplary current and voltage waveforms in a vector control.

In FIG. 6, Vu represents an induced voltage of a U-phase stator winding W among the multi-phase stator windings W of the permanent magnet type rotary electric machine 20. lu represents a current of the U-phase stator winding W. In FIG. 6, lu having a positive value indicates that a current flows from the switching parts 611, 612 to the stator winding W. lu having a negative value indicates that a current flows from the stator winding W to the switching parts 611, 612.

Vsup and Vsun represent control signals for, among the plurality of switching parts 611 to 616, the two switching parts 611, 612 connected to the U-phase stator winding W. Vsup is a control signal for the positive-side switching part 611 which is arranged between the U-phase stator winding W and the positive electrode of the battery 4. Vsun is a control signal for the negative-side switching part 612 which is arranged between the U-phase stator winding W and the negative electrode of the battery 4. H level and L level of Vsup, Vsun indicate on-state and off-state of the switching part 611, 612, respectively.

In the vector control, the switching parts 611 to 616 are turned on or off with a PWM pulse having a frequency higher than the frequency of the induced voltage, which causes a strong chopping action on a current flowing in the stator windings W. As a result, a voltage outputted from the a permanent magnet type rotary electric machine 20 as a generator is raised to a voltage higher than the voltage of the battery 4, so that the battery 4 is charged. The vector control enables the current flowing in the stator windings W to be controlled relative to the induced voltage Vu so as to obtain an enhanced power factor, as shown in FIG. 6 for example.

In the vector control, therefore, the rotational power of the crankshaft 15 is converted into electric power with a high efficiency, to charge the battery. This makes it possible that the battery 4 is charged with high power even when the rotation speed is relatively low, for example, even during idling. This also makes it possible that the permanent magnet type rotary electric machine 20 applies a high load corresponding to power supplied to the battery 4 to rotation of the crankshaft.

In step S19, the control device 60 short-circuits the stator windings W of the permanent magnet type rotary electric machine 20. More specifically, the power generation control unit 622 of the starter power-generator control unit 62 controls the switching parts 611 to 616 such that the stator windings W are short-circuited. The power generation control unit 622 short-circuits the stator windings W corresponding to all of the three phases. As a result of short-circuiting the stator windings W, the current flowing in the stator windings W hinders rotation of the permanent magnet type rotary electric machine 20. That is, the permanent magnet type rotary electric machine 20 generates a braking force. No current flows from the permanent magnet type rotary electric machine 20 to the battery 4.

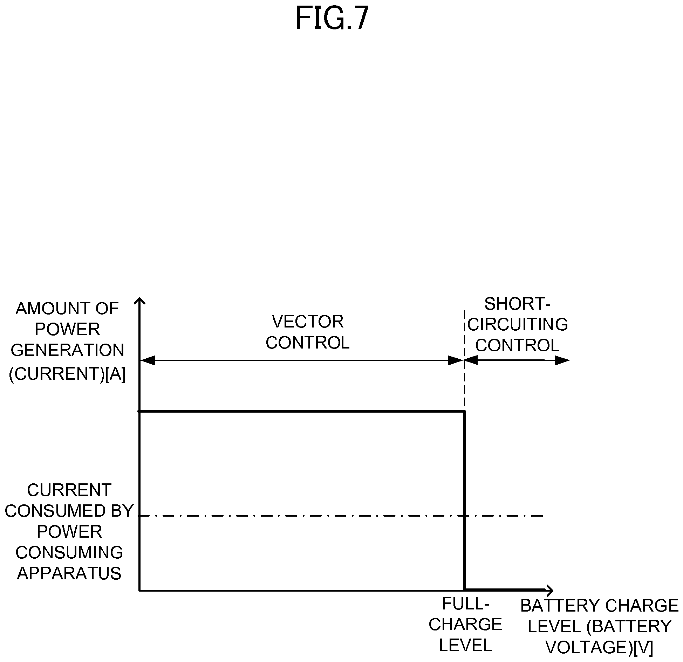

FIG. 7 is a graph schematically showing an example of the relationship between the voltage of the battery 4 and the amount of power generated by the permanent magnet type rotary electric machine 20 at a time of idling of the engine 10.

In the graph, the horizontal axis represents a battery voltage of the battery 4. The battery voltage is the charge level of the battery 4. The vertical axis represents the amount of power generated by the permanent magnet type rotary electric machine 20. The amount of power generated means a current outputted from the permanent magnet type rotary electric machine 20 via the inverter 61.

In the vehicle 1 of this embodiment, upon the charge level of the battery 4 falling below the threshold range, the control on the permanent magnet type rotary electric machine 20 is switched to the vector control which is the highest efficiency load control. Upon the charge level of the battery 4 exceeding the threshold range, the control on the permanent magnet type rotary electric machine 20 is switched to the control based on short-circuit of the stator windings W which is the lowest efficiency load control.

During application of the vector control which is the highest efficiency load control, the amount of power generated by the permanent magnet type rotary electric machine 20 is greater than the current consumed by the power consuming apparatus 70. The battery 4 is charged with power supplied from the permanent magnet type rotary electric machine 20.

During application of the control based on short-circuit of the stator windings W which is the lowest efficiency load control, the amount of power generated by the permanent magnet type rotary electric machine 20 is less than the current consumed by the power consuming apparatus 70. Power of the permanent magnet type rotary electric machine 20 is not charged into the battery. The power consuming apparatus 70 operates while consuming power charged in the battery 4. Thus, the battery 4 is in a discharged state. Since the stator windings W are short-circuited, a braking force generated by the induced voltage occurs in the permanent magnet type rotary electric machine 20. A current produced in the stator windings W is used for generating the braking force. The control based on short-circuit of the stator windings W involves substantially no power generation. Thus, the power generation efficiency is low.

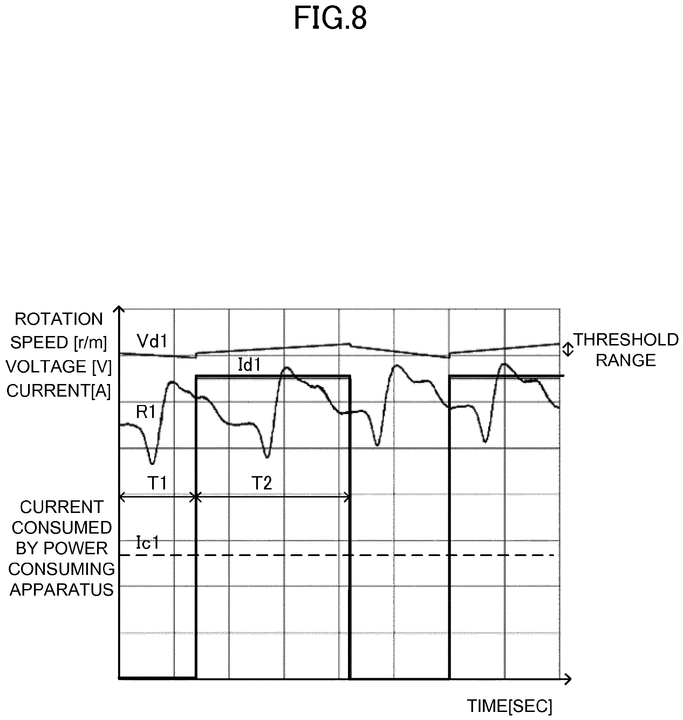

FIG. 8 contains graphs exemplifying a change in the amount of power generated by the permanent magnet type rotary electric machine 20, a change in the battery voltage, and a change in the rotation speed of the crankshaft 15 at a time of idling of the engine 10.

In the graphs of FIG. 8, the horizontal axis represents time. In the graphs: Id represents the amount of power (current) generated by the permanent magnet type rotary electric machine 20; Vd1 represents the voltage of the battery 4; and R1 represents the rotation speed of the crankshaft 15. The voltage Vd1 of the battery 4 is indicated as the charge level of the battery 4. In the graphs, the magnitude of the current Ic1 consumed by the power consuming apparatus 70 is also shown.

In a time period T1, the control device 60 performs the lowest efficiency load control. The stator windings W are short-circuited. The current Id1 outputted from the permanent magnet type rotary electric machine 20 via the inverter 61 is zero. The battery 4 is discharged. The battery 4 outputs the current Ic1 which is consumed by the power consuming apparatus 70. The voltage Vd1 of the battery 4 decreases accordingly.

Upon the voltage Vd1 of the battery 4 falling below the lower limit of the threshold range, the control device 60 switches the load control to the highest efficiency load control. In a time period T2, the control device 60 performs the vector control which is the highest efficiency load control. Since the battery 4 is discharged in the time period T1, the battery 4 is chargeable in the time period T2. The switching parts 611 to 616 are controlled under the highest efficiency load control. In the time period T2, the permanent magnet type rotary electric machine 20 outputs a current greater than the current Ic1 consumed by the power consuming apparatus 70. As a result, a stronger braking force is generated as compared with when the permanent magnet type rotary electric machine 20 supplies a current only to the power consuming apparatus 70 without supplying a current to the battery 4. A braking force generated when a current greater than the current Ic1 consumed by the power consuming apparatus 70 is supplied is stronger than a braking force generated when the stator windings W are short-circuited.

For example, performing the highest efficiency load control alone without performing the lowest efficiency load control keeps the battery 4 in a full-charge state. In this case, the permanent magnet type rotary electric machine 20 cannot supply a current to the battery 4. The permanent magnet type rotary electric machine 20 supplies the current Ic1 to the power consuming apparatus 70 alone. This results in a weaker braking force under the highest efficiency load control.

This embodiment switches between the highest efficiency load control and the lowest efficiency load control. As a consequence, a stronger braking force is applied to rotation of the crankshaft 15 in both a highest efficiency load control period and a lowest efficiency load control period as compared with when, for example, a current is outputted to the power consuming apparatus 70 alone.

In the time period T2, the battery 4 is charged, so that the voltage Vd1 of the battery 4 rises. Upon the voltage Vd1 of the battery 4 exceeding the upper limit of the threshold range, the control device 60 switches the load control to the lowest efficiency load control.

Switching between the highest efficiency load control and the lowest efficiency load control is repeated in the above-described manner. Since the load control is switched in accordance with the voltage Vd1 of the battery 4, the charge level of the battery 4 is maintained.

The rotation speed R1 of the crankshaft 15, which is indicated in the graph of FIG. 8, periodically varies depending on strokes of the engine 10. Generated power is ensured by the highest efficiency load control performed during idling. Thus, the charge level of the battery 4 is maintained. Switching between the highest efficiency load control and the lowest efficiency load control enables a stronger braking force to be applied to rotation of the crankshaft 15 as compared with when, for example, the load control is not changed. It is therefore possible to increase the amount of air supplied to the idling engine 10 while keeping the rotation speed of the crankshaft 15 low. This ensures stability of rotation of the engine 10, and also ensures generated power. In addition, fuel consumption is suppressed.

### [Second Embodiment]

Next, a second embodiment of the present teaching is described. In the following description of the second embodiment, the drawings and reference signs used in the first embodiment are applied, and differences from the first embodiment described above are mainly described.

This embodiment differs from the first embodiment in the control performed in S19 of FIG. 5.

In the lowest efficiency load control (S19) of this embodiment, the power generation control unit 622 of the control device 60 controls the switching parts 611 to 616 based on a phase control scheme instead of short-circuiting the stator windings W (phase control).

In the phase control, the control device 60 performs on/off-operation of each of the switching parts 611 to 616 with a period equal to the period of the induced voltage of the stator windings W. The control device 60 controls the amount of power generation by advancing or retarding timings of conducting the switching parts 611 to 616 of the inverter 61.

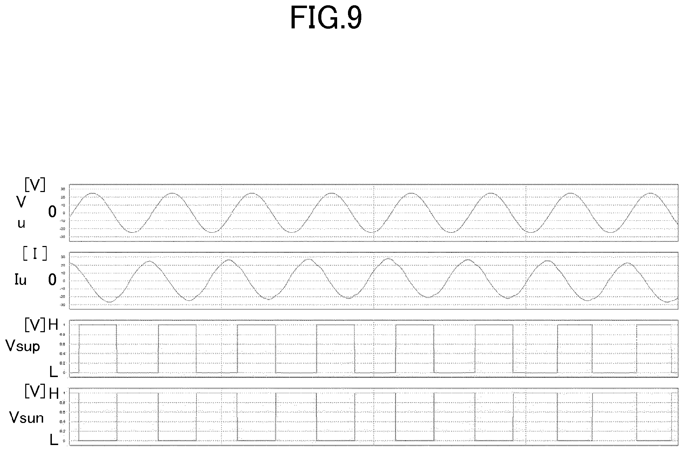

FIG. 9 shows exemplary current and voltage waveforms in a phase control.

What are represented by Vu, Iu, Vsup, and Vsun of FIG. 9 are the same as those of FIG. 6.

In the phase control, the starter power-generator control unit 62 controls on/off of the plurality of switching parts 611 to 616 in accordance with the signals Vsup, Vsun having a period equal to the period of the induced voltage of the stator windings W of the permanent magnet type rotary electric machine 20. The on/off duty cycle of the plurality of switching parts 611 to 616 is fixed. Among the plurality of switching parts 611 to 616, the positive-side switching part 611 and the negative-side switching part 612 have equal on/off duty cycles. Each of the plurality of switching parts 611 to 616 has an on/off duty cycle of 50%.

In the phase control, the starter power-generator control unit 62 advances or retards the timings at which the plurality of switching parts 611 to 616 are rendered conducting, thus controlling a current flowing from the stator windings W to the battery 4. The starter power-generator control unit 62 advances the on/off phase of the switching parts 611 to 616 relative to the induced voltage Vu, to reduce the current flowing in the battery 4. The starter power-generator control unit 62 retards the on/off phase of the switching parts 611 to 616 relative to the induced voltage Vu, to increase the current flowing in the battery 4. In the phase control, turning on/off the switching parts 611 to 616 switches a path of the current outputted from the stator windings W of one phase between the stator windings W of another phase and the battery 4.

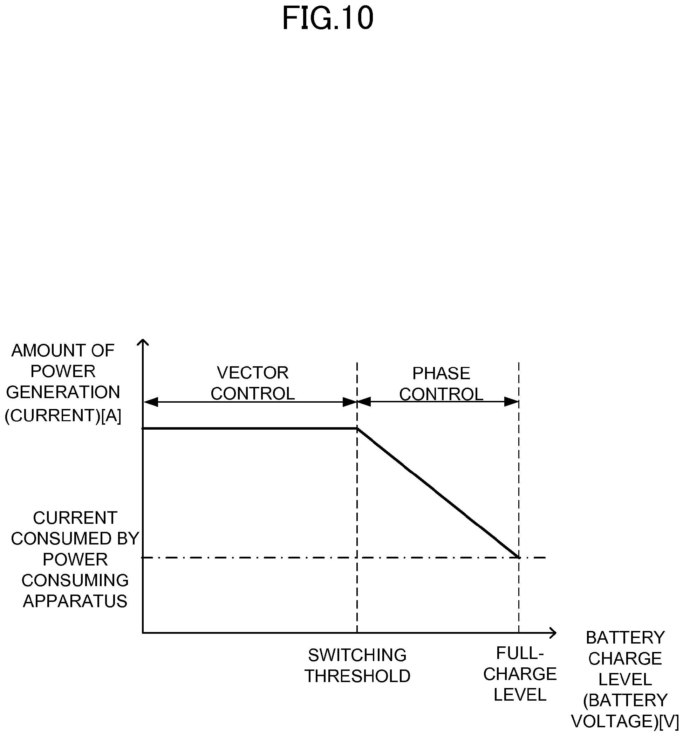

FIG. 10 is a graph schematically showing an example of the relationship between the voltage of the battery 4 and the amount of power generated by the permanent magnet type rotary electric machine 20 at a time of idling according to the second embodiment.

In the graph, the horizontal axis represents a battery voltage of the battery 4. The battery voltage is the charge level of the battery 4. The vertical axis represents the amount of power generated by the permanent magnet type rotary electric machine 20.

In the vehicle 1 of this embodiment, upon the charge level of the battery 4 falling below a switching threshold range, the control on the permanent magnet type rotary electric machine 20 is switched to the vector control which is the highest efficiency load control. Upon the charge level of the battery 4 exceeding the switching threshold range, the control on the permanent magnet type rotary electric machine 20 is switched to the phase control which is the lowest efficiency load control. The switching threshold range of this embodiment is lower than the full-charge level.

In the lowest efficiency load control, the power generation control unit 622 performs such a control that the current to be outputted from the permanent magnet type rotary electric machine 20 via the inverter 61 decreases as the charge level of the battery 4 is higher. The power generation control unit 622 performs such a control that, when the charge level of the battery 4 is almost the full-charge level, the amount of power generated by the permanent magnet type rotary electric machine 20 and outputted via the inverter 61 is equal to the amount of power consumed by the power consuming apparatus 70. That is, when the charge level of the battery 4 is almost the full-charge level during application of the lowest efficiency load control, the amount of power generated by the permanent magnet type rotary electric machine 20 and outputted via the inverter 61 is equal to the amount of power consumed by the power consuming apparatus 70.

In this embodiment, upon the charge level of the battery 4 falling below the threshold range, the vector control is performed to charge the battery 4 with power generated with a high efficiency. Upon the charge level of the battery 4 exceeding the threshold range, the phase control is performed to charge the battery 4. When the charge level of the battery 4 is almost the full-charge level, a current is supplied to the power consuming apparatus 70 alone, without charging the battery 4.

In this embodiment as well, a strong braking force is applied to rotation of the crankshaft 15 under both the highest efficiency load control and the lowest efficiency load control. It is therefore possible to increase the amount of air supplied to the idling engine 10 while keeping the rotation speed of the crankshaft 15 low. This ensures stability of rotation of the engine 10, and also ensures generated power.

### [Third Embodiment]

Next, a third embodiment of the present teaching is described. In the following description of the third embodiment, the drawings and reference signs used in the first embodiment are applied, and differences from the first embodiment described above are mainly described.

In this embodiment, a plurality of types of selectable load controls include a phase control and a control based on short-circuit of the stator windings W. This embodiment, therefore, differs from the first embodiment in the control performed in S18 of FIG. 5.

In the highest efficiency load control (S18 in FIG. 5) of this embodiment, the power generation control unit 622 of the control device 60 controls the switching parts 611 to 616 based on the phase control scheme instead of the vector control scheme. The permanent magnet type rotary electric machine 20 outputs a current via the inverter 61 under control based on the phase control scheme. Thus, the control based on the phase control scheme has a higher power generation efficiency than the control based on short-circuit of the stator windings W does.

In this embodiment as well, switching between the highest efficiency load control and the lowest efficiency load control enables a stronger braking force to be applied to rotation of the crankshaft 15 as compared with when, for example, the load control is not changed. As a result, stability of rotation of the engine 10 is ensured, and generated power is ensured, too. In addition, fuel consumption is suppressed.

### [Fourth Embodiment]

Next, a fourth embodiment of the present teaching is described. The fourth embodiment differs from the above-described second embodiment in that the plurality of types of load controls additionally include the control based on short-circuit of the stator windings W. In the fourth embodiment, a plurality of types of load controls include the vector control, the phase control, and the control based on short-circuit of the stator windings W. The control based on short-circuit of the stator windings W is the lowest efficiency load control.

In this embodiment, when the charge level of the battery 4 is equal to or higher than the full-charge level, the power generation control unit 622 of the control device 60 switches the load control to the control based on short-circuit of the stator windings W. The power generation control unit 622 of the control device 60 controls the switching parts 611 to 616 such that the stator windings W are short-circuited.

In this embodiment, short-circuiting the stator windings W causes discharge of the battery 4. Thus, a still stronger braking force is applied to rotation of the crankshaft 15 under both the highest efficiency load control and the lowest efficiency load control.

Next, an example not part of the present invention is described. In the following example, the drawings and reference signs used in the first embodiment are applied, and differences from the first embodiment described above are mainly described.

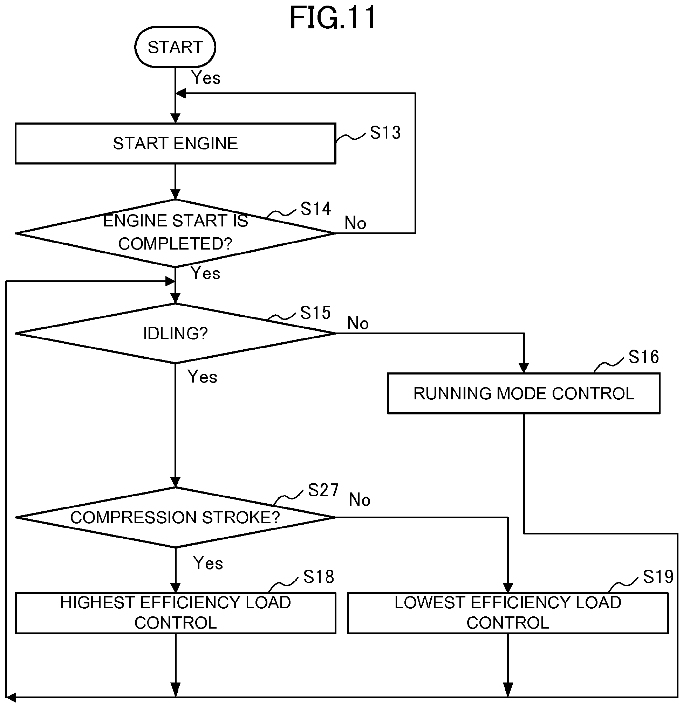

FIG. 11 is a flowchart illustrating operations of the vehicle 1 according to the example.

This example differs from the first embodiment in the control performed in S27. In step S27, the control device 60 of this example determines whether or not the stroke currently conducted in the engine 10 is a compression stroke. The control device 60 identifies the stroke currently conducted in the engine 10, based on the position of the rotor 30 which Is detected by the rotor position detection device 50.

If the stroke currently conducted in the engine 10 is a compression stroke (S27:Yes), the control device 60 switches the control on the permanent magnet type rotary electric machine 20 to the highest efficiency load control (S18). If the stroke currently conducted in the engine 10 is not a compression stroke (S27:No), the control device 60 switches the control on the permanent magnet type rotary electric machine 20 to the lowest efficiency load control (S19).

In this example as well, switching between the highest efficiency load control and the lowest efficiency load control enables a stronger braking force to be applied to rotation of the crankshaft 15 as compared with when, for example, the load control is not changed.

### [DESCRIPTION OF THE REFERENCE SIGNS]

- 1: vehicle
- 4: battery
- 10: engine
- 15: crankshaft
- 20: permanent magnet type rotary electric machine

## Claims

1. A vehicle comprising:
an engine (1) including one or two cylinders (12) and a crankshaft (15), the engine (1) is configured to output rotational power via the crankshaft (15);
a permanent magnet type rotary electric machine (20) including a permanent magnet, the permanent magnet type rotary electric machine (20) is configured to apply a load to rotation of the crankshaft (15) while generating power by receiving rotational power of the crankshaft (15);
a battery (4) that is chargeable with power generated by the permanent magnet type rotary electric machine (20);
a power consuming apparatus (70) mounted to the vehicle, the power consuming apparatus (70) is configured to operate while consuming power generated by the permanent magnet type rotary electric machine (20) or power charged in the battery (4);
an inverter (61) including a plurality of switching parts (611 to 616), the inverter (61) is configured to control a current outputted from the permanent magnet type rotary electric machine (20) to the battery (4) and the power consuming apparatus (70); and
a control device (60) configured to, at least while the engine (1) is idling, direct the permanent magnet type rotary electric machine (20) to produce a load on forward rotation of the crankshaft (15), and configured to selectively adopt a plurality of types of load controls in accordance with a charge level of the battery (4) and control the switching parts (611 to 616) of the inverter (61) based on the selected load control and independently of a change of an engine stroke, so as to continuously applying a load to forward rotation of the crankshaft (15) at a time of engine idling, the plurality of types of load controls different from one another in terms of power generation efficiencies of the permanent magnet type rotary electric machine (20) in an output of the inverter (61), the amount of power generated by the permanent magnet type rotary electric machine (20) and outputted via the inverter (61) in at least part of a time period during which a highest power generation efficiency load control is applied among the plurality of types of load controls being greater than power consumed by the power consuming apparatus (70), the amount of power generated by the permanent magnet type rotary electric machine (20) and outputted via the inverter (61) in at least part of a time period during which a lowest power generation efficiency load control is applied among the plurality of types of load controls being equal to or less than power consumed by the power consuming apparatus (70).

2. A vehicle according to claim 1, wherein the control device (60) is configured to switch a load control to be applied for controlling the switching parts (611 to 616) by selectively adopting a load control of controlling the plurality of switching parts (611 to 616) based on a vector control scheme which serves as the highest power generation efficiency load control and a load control of controlling the plurality of switching parts (611 to 616) based on a phase control scheme which serves as the lowest power generation efficiency load control, and is configured to control the switching parts (611 to 616) based on the selected load control.

3. A vehicle according to claim 1, wherein the permanent magnet type rotary electric machine (20) includes windings (W) that are electrically connected to the inverter (61), and
the control device (60) is configured to switch a load control to be applied for controlling the switching parts (611 to 616) by selectively adopting a load control of controlling the plurality of switching parts (611 to 616) based on a vector control scheme which serves as the highest power generation efficiency load control and a load control of directing the plurality of switching parts (611 to 616) to short-circuit the windings (W) which serves as the lowest power generation efficiency load control, and is configured to control the switching parts (611 to 616) based on the selected load control.

4. A vehicle according to claim 1, wherein the permanent magnet type rotary electric machine (20) includes windings (W) that are electrically connected to the inverter (61), and
the control device (60) is configured to switch a load control to be applied for controlling the switching parts (611 to 616) by selectively adopting a load control of controlling the plurality of switching parts (611 to 616) based on a phase control scheme which serves as the highest power generation efficiency load control and a load control of directing the plurality of switching parts (611 to 616) to short-circuit the windings (W) which serves as the lowest power generation efficiency load control, and is configured to control the switching parts (611 to 616) based on the selected load control.

5. A vehicle according to claim 1, wherein the permanent magnet type rotary electric machine (20) includes windings (W) that are electrically connected to the inverter (61), and
the control device (60) is configured to switch a load control to be applied for controlling the switching parts (611 to 616) by selectively adopting a load control of controlling the plurality of switching parts (611 to 616) based on a vector control scheme which serves as the highest power generation efficiency load control, a load control of directing the plurality of switching parts (611 to 616) to short-circuit the windings (W) which serves as the lowest power generation efficiency load control, and a load control of controlling the plurality of switching parts (611 to 616) based on a phase control scheme which serves as a load control having a power generation efficiency lower than that of the highest power generation efficiency load control and higher than that of the lowest power generation efficiency load control, and is configured to control the switching parts (611 to 616) based on the selected load control.

6. A vehicle according to any one of claims 3 to 5, wherein the permanent magnet type rotary electric machine (20) includes windings (W) that correspond to a plurality of phases, respectively, and
in the load control of directing the plurality of switching parts (611 to 616) to short-circuit the windings (W), the control device (60) is configured to direct the plurality of switching parts (611 to 616) to short-circuit windings (W) corresponding to all of the plurality of phases.

7. A method for controlling a vehicle, the vehicle (1) comprising:
an engine (1) including one or two cylinders (12) and a crankshaft (15), the engine (1) is configured to output rotational power via the crankshaft (15);
a permanent magnet type rotary electric machine (20) including a permanent magnet, the permanent magnet type rotary electric machine (20) is configured to apply a load to rotation of the crankshaft (15) while generating power by receiving rotational power of the crankshaft (15);
a battery (4) that is chargeable with power generated by the permanent magnet type rotary electric machine (20);
a power consuming apparatus (70) mounted to the vehicle, the power consuming apparatus (70) is configured to operate while consuming power generated by the permanent magnet type rotary electric machine (20) or power charged in the battery (4); and
an inverter (61) including a plurality of switching parts (611 to 616), the inverter (61) is configured to control a current outputted from the permanent magnet type rotary electric machine (20) to the battery (4) and the power consuming apparatus (70);
the method comprises:
at least while the engine (1) is idling, directing the permanent magnet type rotary electric machine (20) to produce a load on forward rotation of the crankshaft (15), and selectively adopting a plurality of types of load controls in accordance with a charge level of the battery (4) and control the switching parts (611 to 616) of the inverter (61) based on the selected load control and independently of a change of an engine stroke, so as to continuously applying a load to forward rotation of the crankshaft (15) at a time of engine idling, the plurality of types of load controls different from one another in terms of power generation efficiencies of the permanent magnet type rotary electric machine (20) in an output of the inverter (61),
the amount of power generated by the permanent magnet type rotary electric machine (20) and outputted via the inverter (61) in at least part of a time period during which a highest power generation efficiency load control is applied among the plurality of types of load controls being greater than power consumed by the power consuming apparatus (70), the amount of power generated by the permanent magnet type rotary electric machine (20) and outputted via the inverter (61) in at least part of a time period during which a lowest power generation efficiency load control is applied among the plurality of types of load controls being equal to or less than power consumed by the power consuming apparatus (70).

8. A method for controlling a vehicle according to claim 7, further comprising: switching a load control to be applied for controlling the switching parts (611 to 616) by selectively adopting a load control of controlling the plurality of switching parts (611 to 616) based on a vector control scheme which serves as the highest power generation efficiency load control and a load control of controlling the plurality of switching parts (611 to 616) based on a phase control scheme which serves as the lowest power generation efficiency load control, and controlling the switching parts (611 to 616) based on the selected load control.

9. A method for controlling a vehicle according to claim 7, wherein the permanent magnet type rotary electric machine (20) includes windings (W) that are electrically connected to the inverter (61), and the method further comprises:
switching a load control to be applied for controlling the switching parts (611 to 616) by selectively adopting a load control of controlling the plurality of switching parts (611 to 616) based on a vector control scheme which serves as the highest power generation efficiency load control and a load control of directing the plurality of switching parts (611 to 616) to short-circuit the windings (W) which serves as the lowest power generation efficiency load control, and controlling the switching parts (611 to 616) based on the selected load control, or
switching a load control to be applied for controlling the switching parts (611 to 616) by selectively adopting a load control of controlling the plurality of switching parts (611 to 616) based on a phase control scheme which serves as the highest power generation efficiency load control and a load control of directing the plurality of switching parts (611 to 616) to short-circuit the windings (W) which serves as the lowest power generation efficiency load control, and controlling the switching parts (611 to 616) based on the selected load control, or
switching a load control to be applied for controlling the switching parts (611 to 616) by selectively adopting a load control of controlling the plurality of switching parts (611 to 616) based on a vector control scheme which serves as the highest power generation efficiency load control, a load control of directing the plurality of switching parts (611 to 616) to short-circuit the windings (W) which serves as the lowest power generation efficiency load control, and a load control of controlling the plurality of switching parts (611 to 616) based on a phase control scheme which serves as a load control having a power generation efficiency lower than that of the highest power generation efficiency load control and higher than that of the lowest power generation efficiency load control, and is configured to control the switching parts (611 to 616) based on the selected load control.

10. A method for controlling a vehicle according to claim 9, wherein the permanent magnet type rotary electric machine (20) includes windings (W) that correspond to a plurality of phases, respectively, and
in the load control of directing the plurality of switching parts (611 to 616) to short-circuit the windings (W), the control device (60) is configured to direct the plurality of switching parts (611 to 616) to short-circuit windings (W) corresponding to all of the plurality of phases.

## Patentansprüche

1. Ein Fahrzeug, das umfasst:
einem Motor (1), der eine oder zwei Zylinder (12) und eine Kurbel-Welle (15) beinhaltet, der Motor (1) ist konfiguriert, um Dreh-Kraft über die Kurbel-Welle (15) abzugeben;
eine Permanent-Magnet-Typs-Dreh-Elektro-Maschine (20) , die einen PermanentMagneten beinhaltet, die Permanent-Magnet-Typ-Dreh-Elektro-Maschine (20) ist konfiguriert, um eine Last auf die Drehung der Kurbel-Welle (15) auszuüben, während sie Kraft durch Aufnahme von Dreh-Kraft der Kurbel-Welle (15) erzeugt;
eine Batterie (4), die mit Energie aufladbar ist, die von der Permanent-Magnet-Typ-Dreh-Elektro-Maschine (20) erzeugt ist;
ein Leistung-Verbrauchs-Gerät (70), das an dem Fahrzeug montiert ist, das Leistung-Verbrauchs-Gerät (70) ist konfiguriert, um zu arbeiten, während es Strom, der von der Permanent-Magnet-Typ-Dreh-Elektro-Maschine (20) erzeugt wird, oder Strom, der in der Batterie (4) geladen ist, verbraucht;
einen Inverter (61), der eine Mehrzahl von Schalt-Teilen (611 bis 616) beinhaltet, der Inverter (61) ist konfiguriert, um einen Strom, der von der Permanent-Magnet-Typ-Dreh-Elektro-Maschine (20) an die Batterie (4) und das Leistung-Verbrauchs-Gerät (70) abgegeben ist, zu steuern; und
eine Steuer-Vorrichtung (60), die konfiguriert ist, um, zumindest während des Leerlaufs des Motors (1), die Permanent-Magnet-Typ-Dreh-Elektro-Maschine (20) anzuweisen, um eine Last auf Vorwärts-Drehung der Kurbel-Welle (15) zu erzeugen, und konfiguriert ist, um selektiv eine Mehrzahl von Arten von Last-Steuerungen in Übereinstimmung mit einem Lade-Zustand der Batterie (4) anzunehmen, und um die Schalt-Teile (611 bis 616) des Inverters (61) auf der Grundlage der ausgewählten Last-Steuerung und unabhängig von einer Änderung eines Motorhubs zu steuern, um so kontinuierlich eine Last auf die Vorwärts-Drehung der Kurbel-Welle (15) zu einer Zeit des Motorleerlaufs aufzubringen, die Mehrzahl von Arten von Last-Steuerungen sind unterschiedlich von einander in Bezug auf die Energie-Erzeugungs-Wirkungsgrade der Permanent-Magnet-Typ-Dreh-Elektro-Maschine (20) in einem Ausgang des Inverters (61),
die Menge der Leistung, die durch die Permanent-Magnet-Typ-Dreh-Elektro-Maschine (20) erzeugt, und über den Inverter (61) in mindestens einem Teil einer Zeit-Periode, während der eine Höchste-Leistungs-Erzeugungs-Wirkungsgrad-Last-Steuerung aus der Mehrzahl von Arten von Last-Steuerung angewendet ist, ist größer als die Leistung, die von dem Leistung-Verbrauchs-Gerät (70) verbraucht ist, die Menge der Leistung, die durch die Permanent-Magnet-Typ-Dreh-Elektro-Maschine (20) erzeugt, und über den Inverter (61) in mindestens einem Teil einer Zeit-Periode, während der eine Niedrigste-Leistungs-Erzeugungs-Wirkungsgrad-Last-Steuerung aus der Mehrzahl von Arten von Last-Steuerung angewendet ist, ist gleich oder weniger als die Leistung, die von dem Leistung-Verbrauchs-Gerät (70) verbraucht ist.

2. Ein Fahrzeug gemäß Anspruch 1, wobei die Steuer-Vorrichtung (60) konfiguriert ist, um eine Last-Steuerung schaltet, die zur Steuerung der Schalt-Teile (611 bis 616) anzuwenden ist, durch selektives Einsetzen einer Last-Steuerung zur Steuerung der Mehrzahl von Schalt-Teilen (611 bis 616) auf der Grundlage eines Vektor-Steuer-Schemas, das als Höchste-Leistungs-Erzeugungs-Wirkungsgrad-Last-Steuerung dient, und eine Last-Steuerung zur Steuerung der Mehrzahl von Schalt-Teilen (611 bis 616) auf der Grundlage eines Phasen-Steuer-Schemas, das als Niedrigste-Leistungs-Erzeugungs-Wirkungsgrad-Last-Steuerung dient, und konfiguriert ist, um die Schalt-Teile (611 bis 616) auf der Grundlage der ausgewählten Last-Steuerung zu steuern.

3. Ein Fahrzeug gemäß Anspruch 1, wobei die Permanent-Magnet-Typ-Dreh-Elektro-Maschine (20) Wicklungen (W) aufweist, die elektrisch mit dem Inverter (61) verbunden sind, und
die Steuer-Vorrichtung (60) konfiguriert ist, um eine Last-Steuerung zu schalten, die zum Steuern der Schalt-Teile (611 bis 616) anzuwenden ist, durch selektives Einsetzen einer Last-Steuerung zum Steuern der Mehrzahl von Schalt-Teilen (611 bis 616) auf der Grundlage eines Vektor-Steuer-Schema, das als die Höchste-Leistungs-Erzeugungs-Wirkungsgrad-Last-Steuerung dient, und eine Last-Steuerung zum Anweisen der Mehrzahl von Schalt-Teilen (611 bis 616) zum Kurzschließen der Wicklungen (W), die als die Niedrigste-Leistungs-Erzeugungs-Wirkungsgrad-Last-Steuerung dient, und konfiguriert ist, um die Schalt-Teile (611 bis 616) auf der Grundlage der ausgewählten Last-Steuerung zu steuern.

4. Ein Fahrzeug gemäß Anspruch 1, wobei die Permanent-Magnet-Typ-Dreh-Elektro-Maschine (20) Wicklungen (W) aufweist, die elektrisch mit dem Inverter (61) verbunden sind, und
die Steuer-Vorrichtung (60) konfiguriert ist, um eine Last-Steuerung zu schalten, die zum Steuern der Schalt-Teile (611 bis 616) anzuwenden ist, durch selektives Einsetzen einer Last-Steuerung zum Steuern der Mehrzahl von Schalt-Teile (611 bis 616) auf der Grundlage eines Phasen-Steuer-Schemas, das als die Höchste-Leistungs-Erzeugungs-Wirkungsgrad-Last-Steuerung dient, und eine Last-Steuerung zum Anweisen die Mehrzahl von Schalt-Teile (611 bis 616) zum Kurzschließen der Wicklungen (W), die als Niedrigste-Leistungs-Erzeugungs-Wirkungsgrad-Last-Steuerung dient, und konfiguriert ist, um die Schalt-Teile (611 bis 616) auf der Grundlage der ausgewählten Last-Steuerung zu steuern.

5. Ein Fahrzeug gemäß Anspruch 1, wobei die Permanent-Magnet-Typ-Dreh-Elektro-Maschine (20) Wicklungen (W) aufweist, die elektrisch mit dem Inverter (61) verbunden sind, und
die Steuer-Vorrichtung (60) konfiguriert ist, um eine Last-Steuerung zu schalten, die zum Steuern der Schalt-Teile (611 bis 616) anzuwenden ist, durch selektives Einsetzen einer Last-Steuerung zum Steuern der Mehrzahl von Schalt-Teilen (611 bis 616) auf der Grundlage eines Vektor-Steuer-Schema, das als die Höchste-Leistungs-Erzeugungs-Wirkungsgrad-Last-Steuerung dient, eine Last-Steuerung zum Anweisen der Mehrzahl von Schalt-Teilen (611 bis 616) zum Kurzschließen der Wicklungen (W), die als die Niedrigste-Leistungs-Erzeugungs-Wirkungsgrad-Last-Steuerung dient, und einer Last-Steuerung zum Steuern der Mehrzahl von Schalt-Teile (611 bis 616) auf der Grundlage eines Phasen-Steuer-Schemas, das als Last-Steuerung dient, die einen Leistungs-Erzeugungs-Wirkungsgrad hat, der niedriger ist als derjenige der Höchste-Leistungs-Erzeugungs-Wirkungsgrad-Last-Steuerung und höher als derjenige der Niedrigste-Leistungs-Erzeugungs-Wirkungsgrad-Last-Steuerung, und konfiguriert ist, um die Schalt-Teile (611 bis 616) auf der Grundlage der ausgewählten Last-Steuerung zu steuern.

6. Ein Fahrzeug gemäß einem der Ansprüche 3 bis 5, wobei die Permanent-Magnet-Typ-Dreh-Elektro-Maschine (20) Wicklungen (W) aufweist, die jeweils einer Mehrzahl von Phasen entsprechen, und
bei der Last-Steuerung des Anweisens der Mehrzahl von Schalt-Teilen (611 bis 616), die Wicklungen (W) kurzzuschließen, ist die Steuer-Vorrichtung (60) konfiguriert, um die Mehrzahl von Schalt-Teilen (611 bis 616) anzuweisen, sie Wicklungen (W) kurzschließen, die allen von der Mehrzahl von Phasen entsprechen.

7. Ein Verfahren zur Steuerung eines Fahrzeugs, das Fahrzeug (1) umfasst:
einem Motor (1), der eine oder zwei Zylinder (12) und eine Kurbel-Welle (15) beinhaltet, der Motor (1) ist konfiguriert, um Dreh-Kraft über die Kurbel-Welle (15) abzugeben;
eine Permanent-Magnet-Typs-Dreh-Elektro-Maschine (20) , die einen PermanentMagneten beinhaltet, die Permanent-Magnet-Typ-Dreh-Elektro-Maschine (20) ist konfiguriert, um eine Last auf die Drehung der Kurbel-Welle (15) auszuüben, während sie Kraft durch Aufnahme von Dreh-Kraft der Kurbel-Welle (15) erzeugt;
eine Batterie (4), die mit Energie aufladbar ist, die von der Permanent-Magnet-Typ-Dreh-Elektro-Maschine (20) erzeugt ist;
ein Leistung-Verbrauchs-Gerät (70), das an dem Fahrzeug montiert ist, das Leistung-Verbrauchs-Gerät (70) ist konfiguriert, um zu arbeiten, während es Strom, der von der Permanent-Magnet-Typ-Dreh-Elektro-Maschine (20) erzeugt wird, oder Strom, der in der Batterie (4) geladen ist, verbraucht;
einen Inverter (61), der eine Mehrzahl von Schalt-Teilen (611 bis 616) beinhaltet, der Inverter (61) ist konfiguriert, um einen Strom, der von der Permanent-Magnet-Typ-Dreh-Elektro-Maschine (20) an die Batterie (4) und das Leistung-Verbrauchs-Gerät (70) abgegeben ist, zu steuern;
das Verfahren umfasst:
zumindest während des Leerlaufs des Motors (1), Anweisen der Permanent-Magnet-Typ-Dreh-Elektro-Maschine (20), um eine Last auf Vorwärts-Drehung der Kurbel-Welle (15) zu erzeugen, und selektives Einsetzen eine Mehrzahl von Arten von Last-Steuerungen in Übereinstimmung mit einem Lade-Zustand der Batterie (4), und Steuern der Schalt-Teile (611 bis 616) des Inverters (61) auf der Grundlage der ausgewählten Last-Steuerung und unabhängig von einer Änderung eines Motorhubs, um so kontinuierlich eine Last auf die Vorwärts-Drehung der Kurbel-Welle (15) zu einer Zeit des Motorleerlaufs aufzubringen, die Mehrzahl von Arten von Last-Steuerungen sind unterschiedlich von einander in Bezug auf die Energie-Erzeugungs-Wirkungsgrade der Permanent-Magnet-Typ-Dreh-Elektro-Maschine (20) in einem Ausgang des Inverters (61),
die Menge der Leistung, die durch die Permanent-Magnet-Typ-Dreh-Elektro-Maschine (20) erzeugt, und über den Inverter (61) in mindestens einem Teil einer Zeit-Periode, während der eine Höchste-Leistungs-Erzeugungs-Wirkungsgrad-Last-Steuerung aus der Mehrzahl von Arten von Last-Steuerung angewendet ist, ist größer als die Leistung, die von dem Leistung-Verbrauchs-Gerät (70) verbraucht ist, die Menge der Leistung, die durch die Permanent-Magnet-Typ-Dreh-Elektro-Maschine (20) erzeugt, und über den Inverter (61) in mindestens einem Teil einer Zeit-Periode, während der eine Niedrigste-Leistungs-Erzeugungs-Wirkungsgrad-Last-Steuerung aus der Mehrzahl von Arten von Last-Steuerung angewendet ist, ist gleich oder weniger als die Leistung, die von dem Leistung-Verbrauchs-Gerät (70) verbraucht ist.

8. Ein Verfahren zur Steuerung eines Fahrzeugs gemäß Anspruch 7, das weiter umfasst:
Schalten einer Last-Steuerung, die zur Steuerung der Schalt-Teile (611 bis 616) anzuwenden ist, durch selektives Einsetzen einer Last-Steuerung der Steuerung der Mehrzahl von Schalt-Teilen (611 bis 616) auf der Grundlage eines Vektor-Steuer-Schemas, das als Höchste-Leistungs-Erzeugungs-Wirkungsgrad-Last-Steuerung dient, und einer Last-Steuerung zur Steuerung der Mehrzahl von Schalt-Teilen (611 bis 616) auf der Grundlage eines Phasen-Steuer-Schemas, das als Niedrigste-Leistungs-Erzeugungs-Wirkungsgrad-Last-Steuerung dient, und Steuern der Schalt-Teile (611 bis 616) auf der Grundlage der ausgewählten Last-Steuerung.

9. Ein Verfahren zur Steuerung eines Fahrzeugs gemäß Anspruch 7, wobei die Permanent-Magnet-Typ-Dreh-Elektro-Maschine (20) Wicklungen (W) aufweist, die elektrisch mit dem Inverter (61) verbunden sind, und das Verfahren weiter umfasst:
Schalten einer Last-Steuerung, die zum Steuern der Schalt-Teile (611 bis 616) anzuwenden ist, durch selektives Einsetzen einer Last-Steuerung zum Steuern der Mehrzahl von Schalt-Teilen (611 bis 616) auf der Grundlage eines Vektor-Steuer-Schema, das als die Höchste-Leistungs-Erzeugungs-Wirkungsgrad-Last-Steuerung dient, und einer Last-Steuerung zum Anweisen der Mehrzahl von Schalt-Teilen (611 bis 616) zum Kurzschließen der Wicklungen (W), die als die Niedrigste-Leistungs-Erzeugungs-Wirkungsgrad-Last-Steuerung dient, und Steuern der Schalt-Teile (611 bis 616) auf der Grundlage der ausgewählten Last-Steuerung, oder
Schalten einer Last-Steuerung, die zum Steuern der Schalt-Teile (611 bis 616) anzuwenden ist, durch selektives Einsetzen einer Last-Steuerung zum Steuern der Mehrzahl von Schalt-Teile (611 bis 616) auf der Grundlage eines Phasen-Steuer-Schemas, das als die Höchste-Leistungs-Erzeugungs-Wirkungsgrad-Last-Steuerung dient, und eine Last-Steuerung zum Anweisen die Mehrzahl von Schalt-Teile (611 bis 616) zum Kurzschließen der Wicklungen (W), die als Niedrigste-Leistungs-Erzeugungs-Wirkungsgrad-Last-Steuerung dient, und Steuern der Schalt-Teile (611 bis 616) auf der Grundlage der ausgewählten Last-Steuerung, oder
Schalten einer Last-Steuerung, die zum Steuern der Schalt-Teile (611 bis 616) anzuwenden ist, durch selektives Einsetzen einer Last-Steuerung zum Steuern der Mehrzahl von Schalt-Teilen (611 bis 616) auf der Grundlage eines Vektor-Steuer-Schema, das als die Höchste-Leistungs-Erzeugungs-Wirkungsgrad-Last-Steuerung dient, eine Last-Steuerung zum Anweisen der Mehrzahl von Schalt-Teilen (611 bis 616) zum Kurzschließen der Wicklungen (W), die als die Niedrigste-Leistungs-Erzeugungs-Wirkungsgrad-Last-Steuerung dient, und einer Last-Steuerung zum Steuern der Mehrzahl von Schalt-Teile (611 bis 616) auf der Grundlage eines Phasen-Steuer-Schemas, das als Last-Steuerung dient, die einen Leistungs-Erzeugungs-Wirkungsgrad hat, der niedriger ist als derjenige der Höchste-Leistungs-Erzeugungs-Wirkungsgrad-Last-Steuerung und höher als derjenige der Niedrigste-Leistungs-Erzeugungs-Wirkungsgrad-Last-Steuerung, und konfiguriert ist, um die Schalt-Teile (611 bis 616) auf der Grundlage der ausgewählten Last-Steuerung zu steuern.

10. Ein Verfahren zur Steuerung eines Fahrzeugs gemäß Anspruch 9, wobei die Permanent-Magnet-Typ-Dreh-Elektro-Maschine (20) Wicklungen (W) aufweist, die jeweils einer Mehrzahl von Phasen entsprechen, und
bei der Last-Steuerung des Anweisens der Mehrzahl von Schalt-Teilen (611 bis 616), die Wicklungen (W) kurzzuschließen, ist die Steuer-Vorrichtung (60) konfiguriert, um die Mehrzahl von Schalt-Teilen (611 bis 616) anzuweisen, sie Wicklungen (W) kurzschließen, die allen von der Mehrzahl von Phasen entsprechen.

## Revendications

1. Véhicule comprenant :
un moteur (1) comportant un ou deux cylindres (12) et un vilebrequin (15), dans lequel le moteur (1) est configuré pour fournir de l'énergie de rotation via le vilebrequin (15) ;
une machine électrique rotative du type à aimant permanent (20) comprenant un aimant permanent, dans lequel la machine électrique rotative du type à aimant permanent (20) est configurée pour appliquer une charge pour la rotation du vilebrequin (15) tout en générant de l'énergie en recevant de l'énergie de rotation du vilebrequin (15) ;
une batterie (4) qui peut être chargée avec l'énergie générée par la machine électrique rotative du type à aimant permanent (20) ;
un appareil consommant de l'énergie (70) monté sur le véhicule, dans lequel l'appareil consommant de l'énergie (70) est configuré pour fonctionner tout en consommant de l'énergie générée par la machine électrique rotative du type à aimant permanent (20) ou de l'énergie chargée dans la batterie (4) ;
un onduleur (61) comprenant une pluralité de parties de commutation (611 à 616), dans lequel l'onduleur (61) est configuré pour contrôler le courant envoyé par la machine électrique rotative du type à aimant permanent (20) à la batterie (4) et à l'appareil consommant de l'énergie (70) ; et
un dispositif de contrôle (60) configuré, au moins pendant que le moteur (1) tourne au ralenti, pour commander à la machine électrique rotative du type à aimant permanent (20) de produire une charge lors d'une rotation en marche avant du vilebrequin (15), et configuré pour adopter sélectivement une pluralité de types de contrôles de charge conformément à un niveau de charge de la batterie (4) et pour contrôler les parties de commutation (611 à 616) de l'onduleur (61) sur base du contrôle de charge sélectionné et indépendamment d'un changement de course du moteur, de manière à appliquer en continu une charge de rotation en marche avant du vilebrequin (15) lorsque le moteur tourne au ralenti, les contrôles de la pluralité de types de contrôles de charge étant différents les uns des autres en termes de rendement de génération d'énergie de la machine électrique rotative du type à aimant permanent (20) en sortie de l'onduleur (61),
la quantité d'énergie générée par la machine électrique rotative du type à aimant permanent (20) et sortie via l'onduleur (61) dans au moins une partie d'une période durant laquelle un contrôle de charge à rendement de génération d'énergie maximal est appliqué parmi la pluralité de types de contrôles de charge étant supérieure à l'énergie consommée par l'appareil consommant de l'énergie (70), la quantité d'énergie générée par la machine électrique rotative du type à aimant permanent (20) et sortie via l'onduleur (61) dans au moins une partie d'une période durant laquelle un contrôle de charge à rendement de génération d'énergie minimal est appliqué parmi la pluralité de types de contrôles de charge étant inférieure ou égale à l'énergie consommée par l'appareil consommant de l'énergie (70).

2. Véhicule selon la revendication 1, dans lequel le dispositif de contrôle (60) est configuré pour commuter un contrôle de charge à appliquer pour contrôler les parties de commutation (611 à 616) en adoptant sélectivement un contrôle de charge consistant à contrôler la pluralité de parties de commutation (611 à 616) sur base d'un schéma de contrôle de vecteur qui sert de contrôle de charge à rendement de génération d'énergie maximal et un contrôle de charge consistant à contrôler la pluralité de parties de commutation (611 à 616) sur base d'un schéma de contrôle de phase qui sert de contrôle de charge à rendement de génération d'énergie minimal, et est configuré pour contrôler les parties de commutation (611 à 616) sur base du contrôle de charge sélectionné.

3. Véhicule selon la revendication 1, dans lequel la machine électrique rotative du type à aimant permanent (20) comporte des enroulements (W) qui sont connectés électriquement à l'onduleur (61), et
le dispositif de contrôle (60) est configuré pour commuter un contrôle de charge à appliquer pour contrôler les parties de commutation (611 à 616) en adoptant sélectivement un contrôle de charge consistant à contrôler la pluralité de parties de commutation (611 à 616) sur base d'un schéma de contrôle de vecteur qui sert de contrôle de charge à rendement de génération d'énergie maximal et un contrôle de charge consistant à commander la pluralité de parties de commutation (611 à 616) pour court-circuiter les enroulements (W) qui sert de contrôle de charge à rendement de génération d'énergie minimal, et est configuré pour contrôler les parties de commutation (611 à 616) sur base du contrôle de charge sélectionné.

4. Véhicule selon la revendication 1, dans lequel la machine électrique rotative du type à aimant permanent (20) comporte des enroulements (W) qui sont connectés électriquement à l'onduleur (61), et
le dispositif de contrôle (60) est configuré pour commuter un contrôle de charge à appliquer pour contrôler les parties de commutation (611 à 616) en adoptant sélectivement un contrôle de charge consistant à contrôler la pluralité de parties de commutation (611 à 616) sur base d'un schéma de contrôle de phase qui sert de contrôle de charge à rendement de génération d'énergie maximal et un contrôle de charge consistant à commander la pluralité de parties de commutation (611 à 616) pour court-circuiter les enroulements (W) qui sert de contrôle de charge à rendement de génération d'énergie minimal, et est configuré pour contrôler les parties de commutation (611 à 616) sur base du contrôle de charge sélectionné.

5. Véhicule selon la revendication 1, dans lequel
la machine électrique rotative du type à aimant permanent (20) comporte des enroulements (W) qui sont connectés électriquement à l'onduleur (61), et
le dispositif de contrôle (60) est configuré pour commuter un contrôle de charge à appliquer pour contrôler les parties de commutation (611 à 616) en adoptant sélectivement un contrôle de charge consistant à contrôler la pluralité de parties de commutation (611 à 616) sur base d'un schéma de contrôle de vecteur qui sert de contrôle de charge à rendement de génération d'énergie maximal, un contrôle de charge consistant à commander la pluralité de parties de commutation (611 à 616) pour court-circuiter les enroulements (W) qui sert de contrôle de charge à rendement de génération d'énergie minimal, et un contrôle de charge consistant à contrôler la pluralité de parties de commutation (611 à 616) sur base d'un schéma de contrôle de phase qui sert de contrôle de charge ayant un rendement de génération d'énergie inférieur à celui du contrôle de charge à rendement de génération d'énergie maximal et supérieur à celui du contrôle de charge à rendement de génération d'énergie minimal, et est configuré pour contrôler les parties de commutation (611 à 616) sur base du contrôle de charge sélectionné.

6. Véhicule selon l'une quelconque des revendications 3 à 5, dans lequel
la machine électrique rotative du type à aimant permanent (20) comprend des enroulements (W) qui correspondent à une pluralité de phases, respectivement, et
lors du contrôle de charge consistant à commander la pluralité de parties de commutation (611 à 616) pour court-circuiter les enroulements (W), le dispositif de contrôle (60) est configuré pour commander la pluralité de parties de commutation (611 à 616) pour court-circuiter les enroulements (W) correspondant à toutes les phases de la pluralité de phases.

7. Procédé de contrôle d'un véhicule, le véhicule (1) comprenant :
un moteur (1) comportant un ou deux cylindres (12) et un vilebrequin (15), dans lequel le moteur (1) est configuré pour fournir de l'énergie de rotation via le vilebrequin (15) ;
une machine électrique rotative du type à aimant permanent (20) comprenant un aimant permanent, dans lequel la machine électrique rotative du type à aimant permanent (20) est configurée pour appliquer une charge pour la rotation du vilebrequin (15) tout en générant de l'énergie en recevant de l'énergie de rotation du vilebrequin (15) ;
une batterie (4) qui peut être chargée avec de l'énergie générée par la machine électrique rotative du type à aimant permanent (20) ;
un appareil consommant de l'énergie (70) monté sur le véhicule, dans lequel l'appareil consommant de l'énergie (70) est configuré pour fonctionner tout en consommant de l'énergie générée par la machine électrique rotative du type à aimant permanent (20) ou de l'énergie chargée dans la batterie (4) ; et
un onduleur (61) comprenant une pluralité de parties de commutation (611 à 616), dans lequel l'onduleur (61) est configuré pour contrôler le courant envoyé par la machine électrique rotative du type à aimant permanent (20) à la batterie (4) et à l'appareil consommant de l'énergie (70) ;
dans lequel le procédé comprend :
au moins pendant que le moteur (1) tourne au ralenti, la commande de la machine électrique rotative du type à aimant permanent (20) pour produire une charge lors d'une rotation en marche avant du vilebrequin (15), et l'adoption sélective d'une pluralité de types de contrôles de charge conformément à un niveau de charge de la batterie (4) et le contrôle des parties de commutation (611 à 616) de l'onduleur (61) sur base du contrôle de charge sélectionné et indépendamment d'un changement de course du moteur, de manière à appliquer en continu une charge de rotation en marche avant du vilebrequin (15) lorsque le moteur tourne au ralenti, les contrôles de la pluralité de types de contrôles de charge étant différents les uns des autres en termes de rendement de génération d'énergie de la machine électrique rotative du type à aimant permanent (20) en sortie de l'onduleur (61),
la quantité d'énergie générée par la machine électrique rotative du type à aimant permanent (20) et sortie via l'onduleur (61) dans au moins une partie d'une période durant laquelle un contrôle de charge à rendement de génération d'énergie maximal est appliqué parmi la pluralité de types de contrôles de charge étant supérieure à l'énergie consommée par l'appareil consommant de l'énergie (70),
la quantité d'énergie générée par la machine électrique rotative du type à aimant permanent (20) et sortie via l'onduleur (61) dans au moins une partie d'une période durant laquelle un contrôle de charge à rendement de génération d'énergie minimal est appliqué parmi la pluralité de types de contrôles de charge étant inférieure ou égale à l'énergie consommée par l'appareil consommant de l'énergie (70).

8. Procédé de contrôle d'un véhicule selon la revendication 7, comprenant en outre : la commutation d'un contrôle de charge à appliquer pour contrôler les parties de commutation (611 à 616) en adoptant sélectivement un contrôle de charge consistant à contrôler la pluralité de parties de commutation (611 à 616) sur base d'un schéma de contrôle de vecteur qui sert de contrôle de charge à rendement de génération d'énergie maximal et un contrôle de charge consistant à contrôler la pluralité de parties de commutation (611 à 616) sur base d'un schéma de contrôle de phase qui sert de contrôle de charge à rendement de génération d'énergie minimal, et à contrôler les parties de commutation (611 à 616) sur base du contrôle de charge sélectionné.

9. Procédé de contrôle d'un véhicule selon la revendication 7, dans lequel la machine électrique rotative du type à aimant permanent (20) comporte des enroulements (W) qui sont connectés électriquement à l'onduleur (61), et le procédé comprend en outre :
la commutation d'un contrôle de charge à appliquer pour contrôler les parties de commutation (611 à 616) en adoptant sélectivement un contrôle de charge consistant à contrôler la pluralité de parties de commutation (611 à 616) sur base d'un schéma de contrôle de vecteur qui sert de contrôle de charge à rendement de génération d'énergie maximal et un contrôle de charge consistant à commander la pluralité de parties de commutation (611 à 616) pour court-circuiter les enroulements (W) qui sert de contrôle de charge à rendement de génération d'énergie minimal et à contrôler les parties de commutation (611 à 616) sur base du contrôle de charge sélectionné, ou
à commuter un contrôle de charge à appliquer pour contrôler les parties de commutation (611 à 616) en adoptant sélectivement un contrôle de charge consistant à contrôler la pluralité de parties de commutation (611 à 616) sur base d'un schéma de contrôle de phase qui sert de contrôle de charge à rendement de génération d'énergie maximal et un contrôle de charge consistant à commander la pluralité de parties de commutation (611 à 616) pour court-circuiter les enroulements (W) qui sert de contrôle de charge à rendement de génération d'énergie minimal, et à contrôler les parties de commutation (611 à 616) sur base du contrôle de charge sélectionné, ou
à commuter un contrôle de charge à appliquer pour contrôler les parties de commutation (611 à 616) en adoptant sélectivement un contrôle de charge consistant à contrôler la pluralité de parties de commutation (611 à 616) sur base d'un schéma de contrôle de vecteur qui sert de contrôle de charge à rendement de génération d'énergie maximal, un contrôle de charge consistant à commander la pluralité de parties de commutation (611 à 616) pour court-circuiter les enroulements (W) qui sert de contrôle de charge à rendement de génération d'énergie minimal, et un contrôle de charge consistant à contrôler la pluralité de parties de commutation (611 à 616) sur base d'un schéma de contrôle de phase qui sert de contrôle de charge ayant un rendement de génération d'énergie inférieur à celui du contrôle de charge à rendement de génération d'énergie maximal et supérieur à celui du contrôle de charge à rendement de génération d'énergie minimal, et est configuré pour contrôler les parties de commutation (611 à 616) sur base du contrôle de charge sélectionné.

10. Procédé de contrôle d'un véhicule selon la revendication 9, dans lequel la machine électrique rotative du type à aimant permanent (20) comprend des enroulements (W) qui correspondent à une pluralité de phases, respectivement, et
lors du contrôle de charge consistant à commander la pluralité de parties de commutation (611 à 616) pour court-circuiter les enroulements (W), le dispositif de contrôle (60) est configuré pour commander la pluralité de parties de commutation (611 à 616) pour court-circuiter les enroulements (W) correspondant à toutes les phases de la pluralité de phases.
